(19) Europäisches Patentamt
European Patent Office
Office européen des brevets

(11) EP 2 272 363 A2

(12) **EUROPÄISCHE PATENTANMELDUNG**

(43) Veröffentlichungstag:
**12.01.2011 Patentblatt 2011/02**

(51) Int Cl.:
***A01N 47/38*** *(2006.01)* ***A01N 37/22*** *(2006.01)*

(21) Anmeldenummer: **10183230.1**

(22) Anmeldetag: **10.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**RO SI**

(30) Priorität: **21.09.2001 DE 10146591**

(62) Dokumentnummer(n) der früheren Anmeldung(en) nach Art. 76 EPÜ:
**02772283.4 / 1 429 612**

(71) Anmelder: **Bayer CropScience Aktiengesellschaft**
**40789 Monheim (DE)**

(72) Erfinder:
- **Feucht, Dieter**
  **65760, Eschborn (DE)**
- **Dahmen, Peter**
  **41470, Neuss (DE)**
- **Drewes, Mark**
  **40764, Langenfeld (DE)**
- **Pontzen, Rolf**
  **42799, Leichlingen (DE)**
- **Gesing, Ernst**
  **40699, Erkrath (DE)**

Bemerkungen:
Diese Anmeldung ist am 30-09-2010 als Teilanmeldung zu der unter INID-Code 62 erwähnten Anmeldung eingereicht worden.

(54) **Herbizide enthaltend substituierte Thien-3-yl-Sulfonylamino(thio)carbonyltriazolin(thi)one und Metolachlor**

(57) Die Erfindung betrifft synergistische herbizide Mittel, gekennzeichnet durch einen wirksamen Gehalt an einer Wirkstoffkombination umfassend
(a) eine oder mehrere Verbindungen der Formel (1)

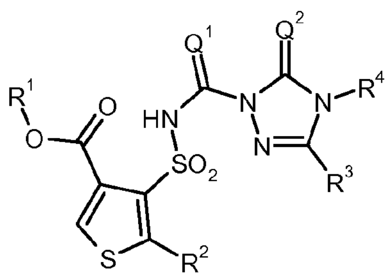

(I)

in welcher $Q^1$, $Q^2$, $R^1$, $R^2$, $R^3$ und $R^4$ die in der Beschreibung angegebene Bedeutung haben - sowie Salze der Verbindungen der Formel (I) -
und
(b) zumindest eines der in der Beschreibung aufgeführten bekannten Herbizide sowie gegebenenfalls
(c) einen Safener.

Die Erfindung betrifft ebenfalls die Verwendung dieser Mittel zur Bekämpfung von unerwünschtem Pflanzenwachstum und ein Verfahren zur Herstellung der erfindungsgemäßen Mittel.

EP 2 272 363 A2

## Beschreibung

Die Erfindung betrifft neue herbizide, synergistische Wirkstoffkombinationen, die bekannte substituierte Thien-3-yl-sulfonylamino(thio)carbonyl-triazolin(thi)one einerseits und eine oder mehrere bekannte herbizid wirksame Verbindungen andererseits und gegebenenfalls zusätzlich eine die Kulturpflanzen-Verträglichkeit verbessernde Verbindung enthalten und mit besonders gutem Erfolg zur Unkrautbekämpfung in verschiedenen Nutzpflanzenkulturen oder auch zur Bekämpfung von monokotylen und dikotylen Unkräutern im semi- und nicht-selektiven Bereich verwendet werden können.

Substituierte Thien-3-yl-sulfonylamino(thio)carbonyl-triazolin(thi)one sind als wirksame Herbizide bekannt (vgl. WO-A-01/05788). Die Wirkung dieser Verbindungen ist jedoch nicht unter allen Bedingungen ganz zufriedenstellend.

Überraschenderweise wurde nun gefunden, dass eine Reihe von Wirkstoffen aus der Reihe der substituierten Thien-3-yl-sulfonylamino(thio)carbonyl-triazolin(thi)one bei gemeinsamer Anwendung mit bestimmten herbizid wirksamen Verbindungen synergistische Effekte hinsichtlich der Wirkung gegen Unkräuter zeigen und besonders vorteilhaft als breit wirksame Kombinationspräparate zur selektiven Bekämpfung von monokotylen und dikotylen Unkräutern in Nutzpflanzenkulturen, wie z.B. in Baumwolle, Gerste, Kartoffeln, Mais, Raps, Reis, Roggen, Soja, Sonnenblumen, Weizen, Zuckerrohr und Zuckerrüben, aber auch zur Bekämpfung von monokotylen und dikotylen Unkräutern im semi- und nicht-selektiven Bereich verwendet werden können.

Gegenstand der Erfindung sind herbizide Mittel, gekennzeichnet durch einen wirksamen Gehalt an einer Wirkstoffkombination bestehend aus

(a) zumindest einem substituierten Thien-3-yl-sulfonylamino(thio)carbonyl-triazolin-(thi)on der allgemeinen Formel (I)

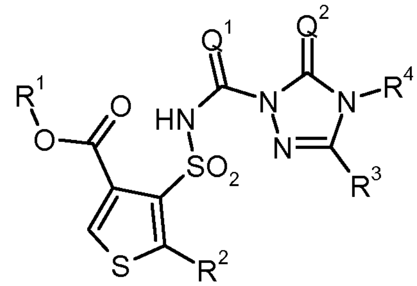

(I)

in welcher

$Q^1$ für O (Sauerstoff) oder S (Schwefel) steht,

$Q^2$ für O (Sauerstoff) oder S (Schwefel) steht,

$R^1$ für gegebenenfalls durch Cyano, Halogen oder $C_1$-$C_4$-Alkoxy substituiertes Alkyl mit 1 bis 6 Kohlenstoffatomen, für jeweils gegebenenfalls durch Cyano oder Halogen substituiertes Alkenyl oder Alkinyl mit jeweils 2 bis 6 Kohlen- stoffatomen, für jeweils gegebenenfalls durch Cyano, Halogen oder $C_1$-$C_4$-Alkyl substituiertes Cycloalkyl oder Cycloalkylalkyl mit jeweils 3 bis 6 Koh- lenstoffatomen in der Cycloalkylgruppe und gegebenenfalls 1 bis 4 Kohlen- stoffatomen im Alkylteil, für jeweils gegebenenfalls durch Nitro, Cyano, Halogen, $C_1$-$C_4$-Alkyl oder $C_1$-$C_4$-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder für jeweils gegebenenfalls durch Nitro, Cyano, Halogen, $C_1$-$C_4$-Alkyl oder $C_1$-$C_4$-Alkoxy substituiertes Hetero- cyclyl oder Heterocyclylalkyl mit jeweils bis zu 6 Kohlenstoffatomen und zu- sätzlich 1 bis 4 Stickstoffatomen und/oder 1 oder 2 Sauerstoff- oder Schwefel- atomen in der Heterocyclylgruppe und gegebenenfalls 1 bis 4 Kohlenstoff- atomen im Alkylteil steht,

$R^2$ für Wasserstoff, Cyano, Nitro, Halogen, für jeweils gegebenenfalls durch Cyano, Halogen oder $C_1$-$C_4$-Alkoxy substituiertes Alkyl, Alkoxy, Alkoxycar- bonyl, Alkylthio, Alkylsulfinyl oder Alkylsulfonyl mit jeweils 1 bis 6 Kohlen- stoffatomen in der Alkylgruppe, oder für jeweils gegebenenfalls durch Cyano oder Halogen substituiertes Alkenyl, Alkinyl, Alkenyloxy oder Alkinyloxy mit jeweils 2 bis 6

Kohlenstoffatomen in der Alkenyl- oder Alkinylgruppe steht,

$R^3$ für Wasserstoff, Hydroxy, Mercapto, Amino, Cyano, Fluor, Chlor, Brom, Iod, für gegebenenfalls durch Fluor, Chlor, Brom, Cyano, $C_1$-$C_4$-Alkoxy, $C_1$-$C_4$- Alkylcarbonyl oder $C_1$-$C_4$-Alkoxy-carbonyl substituiertes Alkyl mit 1 bis 6 Kohlenstoffatomen, für jeweils gegebenenfalls durch Fluor, Chlor und/oder Brom substituiertes Alkenyl oder Alkinyl mit jeweils 2 bis 6 Kohlenstoff- atomen, für jeweils gegebenenfalls durch Fluor, Chlor, Cyano, $C_1$-$C_4$-Alkoxy oder $C_1$-$C_4$-Alkoxy-carbonyl substituiertes Alkoxy, Alkylthio, Alkylamino oder Alkylcarbonylamino mit jeweils 1 bis 6 Kohlenstoffatomen in der Alkylgruppe, für Alkenyloxy, Alkinyloxy, Alkenylthio, Alkinylthio, Alkenylamino oder Alkinylamino mit jeweils 3 bis 6 Kohlenstoffatomen in der Alkenyl- oder Alkinylgruppe, für Dialkylamino mit jeweils 1 bis 4 Kohlenstoffatomen in den Alkylgruppen, für jeweils gegebenenfalls durch Methyl und/oder Ethyl substituiertes Aziridino, Pyrrolidino, Piperidino oder Morpholino, für jeweils ge- gebenenfalls durch Fluor, Chlor, Brom, Cyano und/oder $C_1$-$C_4$-Alkyl substitu- iertes Cycloalkyl, Cycloalkenyl, Cycloalkyloxy, Cycloalkylthio, Cycloalkyl- amino, Cycloalkylalkyl, Cycloalkylalkoxy, Cycloalkylalkylthio oder Cycloalkylalkylamino mit jeweils 3 bis 6 Kohlenstoffatomen in der Cycloalkyl- bzw. Cycloalkenylgruppe und gegebenenfalls 1 bis 4 Kohlenstoffatomen im Alkyl- teil, oder für jeweils gegebenenfalls durch Fluor, Chlor, Brom, Cyano, Nitro, $C_1$-$C_4$-Alkyl, Trifluormethyl, $C_1$-$C_4$-Alkoxy und/oder $C_1$-$C_4$-Alkoxy-carbonyl substituiertes Aryl, Arylalkyl, Aryloxy, Arylalkoxy, Arylthio, Arylalkylthio, Arylamino oder Arylalkylamino mit jeweils 6 oder 10 Kohlenstoffatomen in der Arylgruppe und gegebenenfalls 1 bis 4 Kohlenstoffatomen im Alkylteil steht,

$R^4$ für Wasserstoff, Hydroxy, Amino, Cyano, für $C_2$-$C_{10}$-Alkylidenamino, für ge- gebenenfalls durch Fluor, Chlor, Brom, Cyano, $C_1$-$C_4$-Alkoxy, $C_1$-$C_4$-Alkyl- carbonyl oder $C_1$-$C_4$-Alkoxy-carbonyl substituiertes Alkyl mit 1 bis 6 Kohlen- stoffatomen, für jeweils gegebenenfalls durch Fluor, Chlor und/oder Brom substituiertes Alkenyl oder Alkinyl mit jeweils 2 bis 6 Kohlenstoffatomen, für jeweils gegebenenfalls durch Fluor, Chlor, Brom, Cyano, $C_1$-$C_4$-Alkoxy oder $C_1$-$C_4$-Alkoxy-carbonyl substituiertes Alkoxy, Alkylamino oder Alkyl- carbonylamino mit jeweils 1 bis 6 Kohlenstoffatomen in der Alkylgruppe, für Alkenyloxy mit 3 bis 6 Kohlenstoffatomen, für Dialkylamino mit jeweils 1 bis 4 Kohlenstoffatomen in den Alkylgruppen, für jeweils gegebenenfalls durch Fluor, Chlor, Brom, Cyano und/oder $C_1$-$C_4$-Alkyl substituiertes Cycloalkyl, Cycloalkylamino oder Cycloalkylalkyl mit jeweils 3 bis 6 Kohlenstoffatomen in der Alkylgruppe und gegebenenfalls 1 bis 4 Kohlenstoffatomen im Alkylteil, oder für jeweils gegebenenfalls durch Fluor, Chlor, Brom, Cyano, Nitro, $C_1$- $C_4$-Alkyl, Trifluormethyl und/oder $C_1$-$C_4$-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil steht, oder

$R^3$ und $R^4$ zusammen für gegebenenfalls verzweigtes Alkandiyl mit 3 bis 6 Kohlen- stoffatomen stehen,

- sowie Salze der Verbindungen der Formel (I) -
("Wirkstoffe der Gruppe 1")
und

(b) einer oder mehrerer Verbindungen aus einer zweiten Gruppe von Herbiziden, welche die nachstehend genannten Wirkstoffe enthält:

4,5-Dihydro-3-methoxy-4-methyl-5-oxo-N-[(2-trifluormethoxy-phenyl)-sulfonyl]-1H-1,2,4-triazol-1-carboxamid-Natriumsalz (Flucarbazone-sodium), 2-Chlor-N-(ethoxymethyl)-N-(2-ethyl-6-methyl-phenyl)-acetamid (Acetochlor), 5-(2-Chlor-4-trifluormethyl-phenoxy)-2-nitro-benzoesäure (-Natriumsalz) (Acifluorfen (-sodium)), 2-Chlor-6-nitro-3-phenoxy-benzenamin (Aclonifen), 2-Chlor-N-(methoxymethyl)-N-(2,6-diethyl-phenyl)-acetamid (Alachlor), Methyl-4-hydroxy-6,6-dimethyl-2-oxo-3-[1-[(2-propenyloxy)-imino]-butyl]-3-cyclohexen-1-carboxylat (-Natriumsalz) (Alloxydim (-sodium)), N-Ethyl-N'-i-propyl-6-methylthio-1,3,5-triazin-2,4-diamin (Ametryn), 4-Amino-N-(1,1-Dimethyl-ethyl)-4,5-dihydro-3-(1-methyl-ethyl)-5-oxo-1H-1,2,4-triazol-1-carboxamid (Amicarbazone), N-(4,6-Dimethoxy-pyrimidin-2-yl)-N'-(N-methyl-N-methylsulfonyl-sulfamoyl)-harnstoff (Amidosulfuron), 1H-1,2,4-Triazol-3-amin (Amitrole), S-[2-[(4-Chlor-phenyl)-(1-isopropyl)-amino]-2-oxo-ethyl]-O,O-dimethyl-phosphorodithioate (Anilofos), N-(4-Amino-phenyl-sulfonyl)-carbamidsäure-O-methylester (Asulam), 6-Chlor-4-ethylamino-2-isopropylamino-1,3,5-triazin (Atrazine), 2-[2,4-Dichlor-5-(2-propinyloxy)-phenyl]-5,6,7,8-tetrahydro-1,2,4-triazolo-[4,3-a]-pyridin-3(2H)-o n (A z afenidin), N-(4,6-Dimethoxy-pyrimidin-2-yl)-N'-[1-methyl-4-(2-methyl-2H-tetrazol-5-yl)-1H-pyrazol-5-ylsulfonyl]-harnstoff (Azimsulfuron), N-Benzyl-2-(4-fluor-3-trifluormethyl-phenoxy)-butanamid (Beflubutamid), 4-Chlor-2-oxo-3(2H)-benzthiazolessigsäure (-ethylester) (Benazolin, (-ethyl)), N-Butyl-N-ethyl-2,6-dinitro-4-trifluormethyl-benzenamin (Benfluralin), 2,3-Dihydro-3,3-dimethyl-5-benzofuranyl-ethansulfonat (Benfuresate), N-(4,6-Dimethoxy-pyrimidin-2-yl)-N'-(2-methoxycarbonyl-phenylmethylsulfonyl)-hamstoff (Bensulfuron-methyl), 3-i-Propyl-1H-2,1,3-benzothiadiazin-4(3H)-on-2,2-dioxid (Bentazone), S-[(4-Chlorphenyl)-methyl]-diethylthiocarbamat (Benthiocarb, Thiobencarb), 2-[2-[4-(3,6-Dihydro-3-methyl-2,6-dioxo-4-trifluormethyl-1(2H)-pyrimidmylphenoxymethyl]-5-ethyl-phenoxy-propansäure-methylester (Benzfendizone), 3-(2-Chlor-4-methylsulfonyl-benzoyl)-4-phenylthio-bicyclo-[3.2.1]-oct-3-en-2-on (Benzobicyclon), 2-[[4-(2,4-Dichlor-3-methyl-benzoyl)-1,3-dimethyl-1H-pyrazol-5-yl]-oxy]-1-(4-methyl-phenyl)-ethanon (Benzofenap), Methyl-5-(2,4-dichlor-phenoxy)-2-nitro-benzoat (Bifenox), 2,6-Bis-(4,6-dimethoxy-pyrimidin-2-yl-oxy)-benzoesäure-Natriums**alz** (Bispyribac-sodium), 5-Brom-6-methyl-3-(1-methyl-propyl)-2,4(1H,3H)pyrimidindion (Bromacil), 2-Brom-3,3-dimethyl-N-(1-methyl-1-phenyl-ethyl)-butanamid (Bromobutide), 3,5-Dibrom-4-hydroxy-benzaldehyd-O-(2,4-dinitro-phenyl)-oxim (Bromofenoxim), 3,5-Dibrom-4-hydroxy-benzonitril (Bromoxynil), N-Butoxymethyl-2-chlor-N-(2,6-diethylphenyl)-acetamid (Butachlor), 2-Chlor-5-(3,6-dihydro-3-methyl-2,6-dioxo-4-trifluormethyl-1(2H)-pyrimidinyl)-benzoesäure-[1,1-dimethyl-2-oxo-2-(2-propenyloxy)]-ethylester (Butafenacil), 4-(1-t-Butyl)-N-(s-butyl)-2,6-dinitro-anilin (Butralin), 2-(1-Ethoximino-propyl)-3-hydroxy-5-[2,4,6-trimethyl-3-(1-oxo-butyl)-phenyl]-2-cyclohexen-1-on (Butroxydim), S-Ethyl-bis-(2-methyl-propyl)-thiocarbamat (Butylate), N,N-Diethyl-3-(2,4,6-trimethyl-phenylsulfonyl)-1H-1,2,4-triazol-1-carboxamid (Cafenstrole), (R)-N-Ethyl-2-[(phenylaminocarbonyl)-oxy]-propanamid (Carbetamide), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl), 2,4-Dichlor-1-(3-methoxy-4-nitro-phenoxy)-benzol (Chlomethoxyfen), 5-Amino-4-chlor-2-phenyl-3(2H)-pyridazinon (Chloridazon), N-(4-Chlor-6-methoxy-pyrimidin-2-yl)-N'-(2-ethoxycarbonyl-phenylsulfonyl)-harnstoff (Chlorimuron-ethyl), 1,3,5-Trichlor-2-(4-nitro-phenoxy)-benzol (Chlornitrofen), N'-(3-Chlor-4-methyl-phenyl)-N,N-dimethylharnstoff (Chlorotoluron), N-(4-Methoxy-6-methyl-1,3,5-triazin-2-yl)-N'-(2-chlorphenylsulfonyl)-harnstoff (Chlorsulfuron), 2-Chlor-3-[2-chlor-5-(1,3,4,5,6,7-hexahydro-1,3-dioxo-2H-isoindol-2-yl)-phenyl]-2-propansäure-ethylester (Cinidon-ethyl), Exo-1-methyl-4-isopropyl-2-(2-methyl-phenyl-methoxy)-7-oxabicyclo-[2.2.1]-heptan (Cinmethylin), N-(4,6-Dimethoxy-1,3,5-triazin-2-yl)-N'-(2-(2-methoxy-ethoxy)-phenylsulfonyl)-harnstoff (Cinosulfuron), 2-[1-[2-(4-Chlor-phenoxy)-propoxyamino-butyl]-5-(tetrahydro-2H-thiopyran-3-yl)-1,3-cyclohexandion (Clefoxydim), (E,E)-(+)-2-[1-[[(3-Chlor-2-propenyl)-oxy]-imino]-propyl]-3-hydroxy-2-cyclohexen-1-on (Clethodim), (R)-(2-Propinyl)-2-[4-(5-chlor-3-fluor-pyridin-2-yl-oxy)-phenoxy-propanoat (Clodinafop-propargyl), 2-[(2-Chlor-phenyl)-methyl]-4,4-dimethyl-3-isoxazolidinone (Clomazone), 2-(2,4-Dichlor-3-methyl-phenoxy)-N-phenyl-propanamid (Clomeprop), 3,6-Dichlor-pyridin-2-carbonsäure (Clopyralid), Methyl-3-chloro-2-[(5-ethoxy-7-fluor[1,2,4]triazolo[1,5-c]pyrimidin-2-yl-sulfonyl)-amino]-benzoat (Cloransulam-methyl), N-[(2-Chlor-phenyl)-methyl]-N'-(1-methyl-1-phenyl-ethyl)-harnstoff (Cumyluron), 2-Chlor-4-ethylamino-6-(1-cyano-1-methyl-ethylamino)-1,3,5-triazin (Cyanazine), N-(4,6-Dimethoxy-pyrimidin-2-yl)-N'-(2-cyclopropylcarbonyl-phenylsulfonyl)-harnstoff (Cyclosulfamuron), 2-(1-Ethoximinobutyl)-3-hydroxy-5-(tetrahydro-2H-thiopyran-3-yl)-2-cyclohexen-1-on (Cycloxydim), (R)-2-[4-(4-Cyano-2-fluor-phenoxy)-phenoxy]-propansäure-butylester (Cyhalofop-butyl), 2,4-Dichlorphenoxyessigsäure (2,4-D), N-[3-(Phenylaminocarbonyloxy)-phenyl]-carbamidsäure-O-ethylester (Desmedipham), 3,6-Dichlor-2-methoxy-benzoesäure (Dicamba), 2,6-Dichlor-benzonitril (Dichlobenil), (R)-2-(2,4-Dichlor-phenoxy)-propansäure (Dichlorprop-P), Methyl-2-[4-(2,4-dichlor-phenoxy)-phenoxy]-propanoat (Diclofop-methyl), N-(2,6-Dichlor-phenyl)-5-ethoxy-7-fluor-[1,2,4]-triazolo-[1,5-c]-pyrimidin-2-sulfonamid (Diclosulam), 1,2-Dimethyl-3,5-diphenyl-1H-pyrazolium-methylsulfat (Difenzoquat), N-(2,4-Difluor-phenyl)-2-(3-trifluormethyl-phenoxy)-pyridin-3-carboxamid (Diflufenican), 2-[1-[(3,5-Difluor-phenyl)-amino-carbonyl-hyärazono]-ethyl]-pyridin-3-carbonsäure (Diflufenzopyr), N'-[3-Chlor-4-(5-t-butyl-oxo-1,3,4-oxadiazol-3(2H)-yl)-phenyl]-N,N-dimethyl-harnstoff (Dimefuron), S-(1-Methyl-1-phenyl-ethyl)-1-piperidin-carbothioat (Dimepiperate), 2-Chlor-N-(2,6-dimethyl-phenyl)-N-(2-methoxy-ethyl)-acetamid (Dimethachlor), N-(1,2-Dimethyl-propyl)-N'-ethyl-6-methylthio-1,3,5-triazin-2,4-diamin (Dimethametryn), (S-) 2-Chlor-N-(2,4-dimethyl-3-thienyl)-N-(2-methoxy-1-methyl-ethyl)-acetamid ((S-) (Dimethenamid)), 2-Amino-4-(1-fluor-1-methyl-ethyl)-6-(1-methyl-2-(3,5-dimethyl-phenoxy)-ethylamino)-1,3,5-triazin (Dimexyflam), 6,7-Dihydro-dipyrido[1,2-a:2',1'-c]pyrazindiium dibromide (Diquat-dibromide), S , S-Dimethyl-2-difluormethyl-4-i-butyl-6-trifluormethyl-pyridin-3,5-dicarbothioat (Dithiopyr), N'-(3,4-Dichlor-phenyl)-N,N-dimethyl-harnstoff (Diuron), N-(4-Methyl-phenyl)-N'-(1-methyl-1-phenyl-ethyl)-harnstoff (Dymron, Daimuron), S-Ethyl-dipropylthiocarbamat (EPTC), S-(Phenylmethyl)-N-ethyl-N-(1,2-dimethylpropyl)-thiocarbamat (Esprocarb), N-Ethyl-N-(2-methyl-2-propenyl)-2,6-dinitro-4-trifluormethyl-benzenamin (Ethalfluralin), Methyl-2-[[[[(4-ethoxy-6-methylamino-1,3,5-triazin-2-yl)-amino]-carbonyl]-amino]-sulfonyl]-benzoate (Ethametsulfuronmethyl), 2-Ethoxy-2,3-dihydro-3,3-dimethyl-5-benzofuranyl-methansulfonat (Ethofumesate), (S)-(2-Ethoxy-1-methyl-2-oxoethyl)-2-chlor-5-(2-chlor-4-trifluormethyl-phenoxy)-b enzo at (Ethoxyfen), N-(4,6-Dimethoxy-pyrimidin-2-yl)-N'-(2-ethoxy-phenoxysulfonyl)-harnstoff (Ethoxysulfuron), N-(2,3-Dichlor-phenyl)-4-ethoxy-methoxy-benzamid (Etobenzanid), (R)-Ethyl-2-[4-(6-chlor-benzoxazol-2-yl-oxy)-phenoxy]-propanoat (Fenoxaprop-(P)-ethyl), 4-(2-Chlor-phenyl)-N-cyclohexyl-N-ethyl-4,5-dihydro-5-oxo-1H-tetrazol-1-carboxamid (Fentrazamide), Isopropyl-N-benzoyl-N-(3-chlor-4-fluor-phenyl)-D-alaninat (Flamprop-M-isopropyl), Methyl-N-benzoyl-N-(3-chlor-4-fluor-phenyl)-D-alaninat (Flamprop-M-methyl), N-[[(4,6-Dimethoxy-2-pyrimidinyl)-amino]-carbonyl]-3-trifluormethyl-2-pyridinsulfonamid (Flazasulfuron), N-(2,6-Difluor-phenyl)-8-fluor-5-methoxy-[1,2,4]-triazolo-[1,5-c]-pyrimidin-2-sulfonamid (Florasulam), (R)-2-[4-(5-Trifluormethyl-pyridin-2-yl-oxy)-phenoxy]-propansäure-butylester (Fluazifop-P-butyl), 5-(4-Brom-1-methyl-5-trifluormethyl-1H-pyrazol-3-yl)-2-chlor-4-fluor-benzoesäure-i-propylester (Fluazolate), N-(4-Fluor-phenyl)-N-i-propyl-2-(5-trifluormethyl-1,3,4-thiadiazol-2-yl-oxy)-acetamid (Flufenacet), Ethyl-[2-Chloro-4-fluoro-5-(5-methyl-6-oxo-4-trifluormethyl-1(6H)-pyridazinyl)-phenoxy]-acetate (Flufenpyr), N-(2,6-Difluor-phenyl)-5-methyl-1,2,4-triazolo[1,5-a]-pyrimidin-2-sulfonamid (Flumetsulam), Pentyl-[2-chlor-4-fluor-5-(1,3,4,5,6,7-hexahydro-1,3-dioxo-2H-isoindol-2-yl)-phenoxy]-acetat (Flumiclorac-pentyl), 2-[7-Fluor-3,4-dihydro-3-oxo-4-(2-propinyl)-2H-1,4-benzoxazin-6-yl]-4,5,6,7-tetrahydro-1H-isoindol-1,3-dion (Flumioxazin), 2-[4-Chlor-2-fluor-5-[(1-methyl-2-propinyl)-oxy]-phenyl]-4,5,6,7-tetrahydro-1H-isoindol-1,3(2H)-dion (Flumipropyn), N,N-Dimethyl-N'-(3-trifluormethyl-phenyl)-harnstoff (Fluometuron), 3-Chlor-4-chlormethyl-1-(3-trifluormethyl-phenyl)-2-pyrrolidinon (Fluorochloridone), 5-(2-Chlor-4-trifluormethyl-phenoxy)-2-nitro-benzoesäure-ethoxycarbonylmethylester (Fluoroglycofen-ethyl), 1-(4-Chlor-3-(2,2,3,3,3-pentafluor-propoxymethyl)-phenyl)-5-phenyl-1H-1,2,4-triazol-3-carboxamid (Flupoxam), 1-Isopropyl-2-chlor-5-(3,6-dihydro-3-methyl-2,6-dioxo-4-trifluormethyl-1(2H)-pyrimidyl)-benzoat (Flupropacil), N-(4,6-Dimethoxy-pyrimidin-2-yl)-N'-(3-methoxycarbonyl-6-trifluormethyl-pyridin-2-yl-sulfonyl)-harnstoff-Natriumsalz (Flupyrsulfuron-methyl-sodium), 9-Hydroxy-9H-fluoren-9-carbonsäure (Flurenol), (4-Amino-3,5-dichlor-6-fluor-pyridin-2-yl-oxy)-essigsäure (-2-butoxy-1-methyl-ethylester, -1-methyl-heptylester) (Fluroxypyr, -butoxypropyl, -meptyl), 5-Methylamino-2-phenyl-4-(3-trifluormethyl-phenyl)-3(2H)-furanon (Flurtamone), Methyl-[(2-chlor-4-fluor-5-(tetrahydro-3-oxo-1H, 3H-[1,3,4]-thiadiazolo-[3,4-a]-pyridazin-1-yliden)-amino-phenyl]-thio-acetat (Fluthiacet-methyl), 5-(2-Chlor-4-trifluormethyl-phenoxy)-N-methylsulfonyl-2-nitro-benza m i d (Fomesafen), 2-[[[[(4,6-Dimethoxy-2-pyrimidinyl)-amino]-carbonyl]-amino]-sulfonyl]-4-formylamino-N,N-dimethyl-benzamid(Foramsulfuron),2-Amino-4-(hydroxymethyl-phosphinyl)-butansäure (-ammoniumsalz) (Glufosinate (-ammonium)), N-Phosphonomethyl-glycin (-isopropylammoniumsalz), (Glyphosate, -isopropylammonium), Methyl-3-chloro-5-[[[[(4,6-dimethoxy-2-pyrimidinyl)-amino]-carbonyl]-amino]-sulf onyl]-1-methyl-1H-pyrazol-4-carboxylate (Halosulfuron-methyl), (R)-2-[4-(3-Chlor-5-trifluormethyl-pyridin-2-yl-oxy)-phenoxy]-propansäure (-methylester, -2-ethoxy-ethylester, -butylester) (Haloxyfop, -methyl, -P-methyl, -ethoxyethyl, -butyl), 3-Cyclohexyl-6-dimethylamino-1-methyl-1,3,5-triazin-2,4(1H,3H)-dion (Hexazinone), Methyl-2-(4,5-dihydro-4-methyl-4-isopropyl-5-oxo-1H-imidazol-2-yl)-4-methylbenzoat (Imazamethabenz-methyl), 2-(4,5-Dihydro-4-methyl-4-isopropyl-5-oxo-1H-imidazol-2-yl)-5-methoxymethyl-pyridin-3-carbonsäure (Imazamox), 2-(4,5-Dihydro-4-methyl-4-isopropyl-5-oxo-1H-imidazol-2-yl)-5-methyl-pyridin-3-carbonsäure (Imazapic), 2-(4,5-Dihydro-4-methyl-4-(i-propyl)-5-oxo-1H-imidazol-2-yl)-3-pyridin-carbonsäure (Imazapyr), 2-(4,5-Dihydro-4-methyl-4-isopropyl-5-oxo-1H-imidazol-2-yl)-chinolin-3-carbonsäure (Imazaquin), 2-(4,5-Dihydro-4-methyl-4-i-propyl-5-oxo-1H-imidazol-2-yl)-5-ethyl-pyridin-3-carbonsäure (Imazethapyr), N-(4,6-Dimethoxy-pyrimidin-2-yl)-N'-(2-chlor-imidazo[1,2-a]-pyridin-3-yl-sulfonyl)-harnstoff (Imazosulfuron), 2-[2-(3-Chlor-phenyl)-oxiranylmethyl]-2-ethyl-1H-inden-1,3(2H)-dion (Indanofan), N-(4-Methoxy-6-methyl-1,3,5-triazin-2-yl)-N'-(5-iod-2-methoxy-carbonyl-phenylsulfonyl)-harnstoff-Natriumsalz (Iodosulfuron-methyl-sodium), 4-Hydroxy-3,5-diiod-benzonitril (Ioxynil), N,N-Dimethyl-N'-(4-isopropyl-phenyl)-harnstoff (Isoproturon), N-(5-t-Butyl-3-isoxazolyl)-N',N'-dimethylharnstoff (Isouron), N-(3-(1-Ethyl-1-methyl-propyl)-isoxazol-5-yl)-2,6-dimethoxy-benzamid (Isoxaben), (4-Chlor-2-methylsulfonyl-phenyl)-(5-cyclopropyl-isoxazol-4-yl)-methanon (Isoxachlor**tole**), (5-Cyclopropyl-isoxazol-4-yl)-(2-methylsulfonyl-4-trifluormethyl-phenyl)-methanon(Isoxaflutole),2-[(2,3-Dihydro-5,8-dimethyl-1,1,-dioxidospiro[4H-1-benzothiopyran-4,2'-[1,3]-dioxolan-6-yl)-carbonyl]-1,3-cyclohexan-dion (Ketospiradox), (2-Ethoxy-1-methyl-2-oxo-ethyl)-5-(2-chlor-4-trifluormethyl-phenoxy)-2-nitrobenzoat (Lactofen), 3-Cyclohexyl-6,7-dihydro-1H-cyclopentapyrimidin-2,4-(3H, 5H)-dion (Lenacil), N'-(3,4-dichlor-phenyl)-N-methoxy-N-methyl-harnstoff (Linuron), (4-Chlor-2-methyl-phenoxy)-essigsäure (MCPA), (R)-2-(4-Chlor-2-methyl-phenoxy)-propionsäure (Mecoprop-P), 2-(2-Benzthiazolyloxy)-N-methyl-N-phenyl-acetamid(Mefenacet),2-[[[[(4,6-Dimethoxy-2-pyrimidinyl)-amino]-carbonyl]-amino]-sulfonyl]-4-[[(methylsulfonyl)-amino]methyl]-benzoesäure-methylester (Mesosulfuron), 2-(4-Methylsulfonyl-2-nitrobenzoyl)-1,3-cyclohexandion (Mesotrione), 4-Amino-3-methyl-6-phenyl-1,2,4-triazin-5(4H)-on (Metamitron), 2-Chlor-N-(2,6-dimethylphenyl)-N-(1H-pyrazol-1-yl-methyl)-acetamid (Metazachlor), N-(2-Benzthiazolyl)-N,N'-dmiethyl-harmnstoff (Methabenzthiazuron), N'-(4-Brom-phenyl)-N-methoxy-N-methylharnstoff (Metobromuron), (S)-2-Chlor-N-(2-ethyl-6-methyl-phenyl)-N-(2-methoxy-1-methyl-ethyl)-acet-amid (Metolachlor, S-Metolachlor), N-(2,6-Dichlor-3-methyl-phenyl)-5,7-dimethoxy-1,2,4-triazolo[1,5-a]-pyrimidin-2-sulfonamid (Metosulam), N'-(3-Chlor-4-methoxy-phenyl)-N,N-dimethyl-harnstoff (Metoxuron), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulfonyl)-harnstoff (Metsulfuron-methyl), S-Ethyl-hexahydro-1H-azepin-1-carbothioat (Molinate), 2-(2-Naphthyloxy)-N-phenyl-propanamid (Naproanilide), N,N-Diethyl-2-(1-naphthalenyl-oxy)-propanamide (Napropamide), N-Butyl-N'-(3,4-dichlor-phenyl)-N-methyl-hamstoff (Neburon), N-(4,6-Dimethoxy-pyrimidin-2-yl)-N'-(3-dimethylcarbamoyl-pyridin-2-yl-sulfonyl)-harnstoff (Nicosulfuron), 4-Chlor-5-methylamino-2-(3-trifluormethylphenyl)-3(2H)pyridazinon (Norflurazon), S-(2-Chlor-benzyl)-N,N-diethyl-thiocarbamat (Orbencarb), 4-Dipropylamino-3,5-dinitro-benzensulfonamid (Oryzalin), 3-[2,4-Dichlor-5-(2-propinyloxy)-phenyl]-5-(t-butyl)-1,3,4-oxadiazol-2(3H)-on (Oxadiargyl), 3-[2,4-Dichlor-5-(1-methyl-ethoxy)-phenyl]-5-(t-butyl)-1,3,4-oxadiazol-2(3H)-on (Oxadiazon), N-(4,6-Dimethyl-pyrimidin-2-yl)-N'-(2-oxetan-3-yl-oxycarbonyl-phenylsulfonyl)-harnstoff (Oxasulfuron), 3-[1-(3,5-Dichlor-phenyl)-1-i-propyl]-2,3-dihydro-6-methyl-5-phenyl-4H-1,3-oxazin-4-on (Oxaziclomefone), 2-Chlor-1-(3-ethoxy-4-nitro-phenoxy)-4-trifluormethyl-benzen (Oxyfluorfen), 1,1 '-Dimethyl-4,4'-bipyridinium (Paraquat), 1-Amino-N-(1-ethyl-propyl)-3,4-dimethyl-2,6-dinitro-benzol (Pendimethalin), 4-(t-Butyl)-N-(1-ethyl-propyl)-2,6-dinitro-benzenamin (Pendralin), 2-(2,2-Difluorethoxy)-N-(5,8-dimethoxy[1,2,4]triazolo[1,5-c]pyrimidin-2-yl)-6-trifluormethyl-benzensulfonamid (Penoxsulam), 3-(4-Chlor-5-cyclopentyloxy-2-fluorphenyl)-5-(1-methyl-ethyliden)-2,4-oxazolidin-dion (Pentoxazone), 2-Chlor-N-(2-ethoxy-ethyl)-N-(2-methyl-1-phenyl-1-propenyl)-acetamid (Pethoxamid), N-[3-(3-Methyl-phenylaminocarbonyloxy)-phenyl]-carbamidsäure-O-methylester (Phenmedipham), 4-Amino-3,5,6-trichlor-pyridin-2-carbonsäure (Picloram), N-(4-Fluor-phenyl)-6-(3-trifluormethyl-phenoxy)-pyridin-2-carboxamid (Picolinafen), S-[2-(2-Methyl-1-piperidinyl)-2-oxo-ethyl]-O,O-dipropyl-phosphorodithioat (Piperophos), 2-Chlor-N-(2,6-diethyl-phenyl)-N-(2-propoxy-ethyl)-acetamid (Pretilachlor), N-(4,6-Bis-difluormethoxy-pyrimidin-2-yl)-N'-(2-methoxycarbonyl-phenylsulfonyl)-harnstoff (Primisulfuron-methyl), 1-Chlor-N-[2-chlor-4-fluor-5-[(6S,7aR)-6-fluor-tetrahydro-1,3-dioxo-1H-pyrrolo[1,2-c]imidazol-2(3H)-yl]-phenyl]-methansulfonamid (Profluazol), 2-[1-[[2-(4-Chlor-phenoxy)-propoxy]-imino]-butyl]-3-hydroxy-5-(tetrahydro-2H-thiopyranyl)-2-cyclohexen-1-on (Profoxydim), N,N'-Bis-i-propyl-6-methylthio-1,3,5-triazin-2,4-diamin (Prometryn), 2-Chlor-N-isopropyl-N-phenyl-acetamid (Propachlor), N-(3,4-Dichlor-phenyl)-propanamid (Propanil), (R)-[2-[[(1-Methyl-ethyliden)-amino]-oxy]-ethyl]-2-[4-(6-chlor-2-chinoxalinyloxy)-phenoxy]-propanoat (Propaquizafop), 2-Chlor-N-(2-ethyl-6-methyl-phenyl)-N-[(1-methyl-ethoxy)-methyl]-acetamid (Propisochlor), 2-[[[(4,5-Dihydro-4-methyl-5-oxo-3-propoxy-1H-1,2,4-triazol-1-yl)-carbonyl]-amino]-sulfonyl]-benzoesäure-methylester-Natriumsalz (Propoxycarbazone-sodium), 3,5-Dichlor-N-(1,1-dimethyl-2-propinyl)-benzamid (Propyzamide), S-Phenylmethyl-N,N-dipropyl-thiocarbamat (Prosulfocarb), N-(4-Methoxy-6-methyl-1,3,5-triazin-2-yl)-N'-(2-(3,3,3-trifluor-propyl)-phenylsulfonyl)-harnstoff (Prosulfuron), 1-(3-Chlor-4,5,6,7-tetrahydropyrazolo[1,5-a]pyridin-2-yl)-5-(methyl-2-propinylamino)-1H-pyrazol-4-carbonitril (Pyraclonil), Ethyl-[2-chlor-5-(4-chlor-5-difluormethoxy-1-methyl-1H-pyrazol-3-yl)-4-fluor-phenoxy]-acetat (Pyraflufen-ethyl), 4-(2,4-Dichlor-benzoyl)-1,3-dimethyl-5-(4-methyl-phenylsulfonyloxy)-pyrazol (Pyrazolate), N-(4,6-Dimethoxy-pyrimidin-2-yl)-N'-(4-ethoxycarbonyl-1-methyl-pyrazol-5-yl-sulfonyl)-harnstoff (Pyrazosulfuron-ethyl), 4-(2,4-Dichlorbenzoyl)-1,3-dimethyl-5-(phenylcarbonylmethoxy)-pyrazol (Pyrazoxyfen), Diphenylmethanon-O-[2,6-bis-(4,6-dimethoxy-pyrimidin-2-yl-oxy)-benzoyl]-oxim (Pyribenzoxim), O[3-(1,1-Dimethylethyl)-phenyl]-(6-methoxy-2-pyridinyl)-methylthiocarbamat (Pyributicarb), 6-Chlor-3-phenyl-4-pyridazinol (Pyridafol), O-(6-Chlor-3-phenyl-pyridazin-4-yl)-S-octyl-thiocarbonat (Pyridate), 6-Chlor-3-phenyl-pyridazin-4-ol (Pyridatol), 7-[(4,6-Dimethoxy-2-pyrimidinyl)-thio]-3-methyl-1(3H)-isobenzofuranon (Pyriftalid), 2-(4,6-Dimethoxy-pyrimidin-2-yl-oxy)-benzoesäure-methylester (Pyriminobac-methyl), 2-Chlor-6-(4,6-dimethoxy-pyrimidin-2-ylthio)-benzoesäure-Natriumsalz (Pyrithiobac-sodium), 3,7-Dichlor-chinolin-8-carbonsäure (Quinchlorac), 7-Chlor-3-methyl-chinolin-8-carbonsäure (Quinmerac), 2-Amino-3-chlor-1,4-naphthalindion (Quinoclamine), (R)-2-[4-(6-Chlor-2-chinoxalinyloxy)-phenoxy]-propansäure (-ethylester, -tetrahydro-2-furanyl-methylester) (Quizalofop, -ethyl, -P-ethyl, -P-tefuryl), N-(4,6-Dimethoxy-pyrimidin-2-yl)-N'-(3-ethylsulfonyl-pyridin-2-yl-sulfonyl)-harnstoff (Rimsulfuron), 2-(1-Ethox-iminobutyl)-5-(2-ethylthiopropyl)-3-hydroxy-2-cyclohexen-1-on (Sethoxydim), 6-Chlor-2,4-bis-ethylamino-1,3,5-triazin (Simazine), 2-(2-Chlor-4-methylsulfonyl-benzoyl)-cyclohexan-1,3-dion (Sulcotrione), 2-(2,4-Dichlor-5-methylsulfonylamino-phenyl)-4-difluormethyl-5-methyl-2,4-dihydro-3H-1,2,4-triazol-3-on (Sulfentrazone), Methyl 2-[[[[(4,6-dimethyl-2-pyrimidinyl)-amino]-carbonyl]-amino]-sulfonyl]-benzoate (Sulfometuron-methyl), N-Phosphonomethyl-glycin-trimethylsulfonium (Sulfosate), N-(4,6-Dimethoxy-pyrimidin-2-yl)-N'-(2-ethylsulfonyl-imidazo[1,2-a]-pyridin-3-sulfonamid (Sulfosulfuron), N-(5-t-Butyl-1,3,4-thiadiazol-2-yl)-N,N'-dimethylharnstoff (Tebuthiuron), 2-[1-[(3-Chlor-2-propenyl)-oxy-imino]-propyl]-3-hydroxy-5-(tetrahydro-2H-pyran-4-yl)-2-cyclohexen-1-on (Tepraloxydim), 6-Chlor-4-ethylamino-2-t-butylamino-1,3,5-triazin (Terbuthylazine), 2-t-Butylamino-4-ethylamino-6-methylthio-1,3,5-triazin (Terbutryn), 2-Chlor-N-(2,6-dimethyl-phenyl)-N-(3-methoxy-2-thienyl-methyl)-acetamid (Thenylchlor), 2-Difluormethyl-5-(4,5-dihydrothiazol-2-yl)-4-(2-methyl-propyl)-6-trifluormethyl-pyridin-3-carbonsäure-methylester (Thiazopyr), N-(4-Methoxy-6-methyl-1,3,5-triazin-2-yl)-N'-(2-methoxycarbonyl-thien-3-yl-sulfonyl)-harnstoff (Thifensulfuron-methyl), S-Phenylmethyl-bis-s-butylcarbamothioate (Tiocarbazil), 2-(Ethoximino-propyl)-3-hydroxy-5-(2,4,6-trimethylphenyl)-2-cyclohexen-1-on (Tralkoxydim), S-(2,3,3-Trichlor-2-propenyl)-diisopropyl-carbamothioat (Triallate), N-(4-Methoxy-6-methyl-1,3,5-triazin-2-yl)-N'-[2-(2-chlorethoxy)-phenylsulfonyl]-harnstoff (Triasulfuron), N-Methyl-N-(4-methoxy-6-methyl-1,3,5-triazin-2-yl)-N'-(2-methoxycarbonyl-phenylsulfonyl)-harnstoff (Tribenuron-methyl), (3,5,6-Trichlor)-pyridin-2-yl-oxy-essigsäure (Triclopyr), 2-(3,5-Dichlorphenyl)-2-(2,2,2-trichlor-ethyl)-oxiran (Tridiphane), N-[[(4,6-Dimethoxy-2-pyrimidinyl)-amino]-carbonyl]-3-(2,2,2-trifluor-ethoxy)-2-pyridinsulfonamid-Natriumsalz (Trifloxysulfuron), 1-Amino-2,6-dinitro-N,N-dipropyl-4-trifluormethyl-benzol (Trifluralin) , N-[4-Dimethylamino-6-(2,2,2-trifluor-ethoxy)-1,3,5-triazin-2-yl]-N'-(2-methoxycarbonyl-phenylsulfonyl)-harnstoff (Triflusulfuron-methyl), N-(4-Methoxy-6-trifluormethoxy-1,3,5-triazin-2-yl)-N'-(2-trifluormethyl-phenylsulfonyl)-harnstoff (Tritosulfuron), N-[[(4,6-Dimethoxy-2-pyrimidinyl)-amino]-carbonyl]-3-(N-methyl-N-methylsulfonyl-amino)-2-pyridinsulfonamid (vgl. WO-A-92/10660), N-[[(4,6-Dimethoxy-2-pyrimidinyl)-amino]-carbonyl]-3-(N-methyl-N-methylsulfonyl-amino)-2-pyridinsulfonamid (vgl. WO-A-92/10660), 4-(4,5-Dihydro-4-methyl-5-oxo-3-trifluormethyl-1H-1,2,4-triazol-1-yl)-2-(ethylsulfonylamino)-5-fluor-benzolcarbothioamid (HWH4991, vgl. WO-A-95/30661), 2-Chlor-N-[1-(2,6-dichlor-4-difluormethyl-phenyl)-4-nitro-1H-pyrazol-5-yl]-propancarbonsäureamid (SLA5599, vgl. EP-A-303153), [2-Chlor-3-(4,5-dihydro-3-isoxazolyl)-4-methylsulfonyl-phenyl]-(5-hydroxy-1-methyl-1H-pyrazol-4-yl)-methanon (vgl. WO-A-96/26206, WO-A-98/31681), [3-(4,5-Dihydro-3-isoxazolyl)-2-methyl-4-methylsulfonyl-phenyl]-(5-hydroxy-1-methyl-1H-pyrazol-4-yl)-methanon (vgl. WO-A-96/26206, WO-A-98/31681), [3-[2-Chlor-3-[(2,6-dioxo-cyclohexyl)-carbonyl]-6-ethylsulfonyl-phenyl]-5-isoxazolyl]-acetonitril (vgl. WO-A-01/28341), 2-[2-Chlor-4-methylsulfonyl-3-[(2,2,2-trifluor-ethoxy)-methyl]-benzoyl]-1,3-cyclohexandion (vgl. WO-A-01/28341), 2-[[5,8-Dimethyl-1,1-dioxido-4-(2-pyrimidinyloxy)-3,4-dihydro-2H-thiochromen-6-yl]-carbonyl]-1,3-cyclohexandion (vgl. WO-A-01/28341)

("Wirkstoffe der Gruppe 2"),
und gegebenenfalls zusätzlich

(c) eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 5-Chlor-chinoxalin-8-oxy-essigsäure-(1-methyl-hexylester) (Cloquintocet-mexyl), α-(Cyanomethoximino)-phenylacetonitril (Cyometrinil), 2,4-Dichlor-phenoxy-essigsäure (2,4-D), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Daimuron, Dymron), 4,6-Dichlor-2-phenyl-pyrimidin (Fen**clorim),** 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1, 8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2,5-trimethyl-oxazolidin(R-29148),N-Cyclopropyl-4-[[(2-methoxy-5-methyl-benzoyl)-amino]-sulfonyl]-benzamid, N-[[(4-Methoxyacetylamino)-phenyl]-sulfonyl]-2-methoxy-benzamid und N-[[(4-Methylaminocarbonylamino)-phenyl]-sulfonyl]-2-methoxy-benzamid
(letztere jeweils bekannt aus WO-A-99/66795)
("Wirkstoffe der Gruppe 3").

Bevorzugte Bedeutungen der oben in Zusammenhang mit der Formel (I) aufgeführten Gruppen werden im Folgenden definiert.

$Q^1$ steht bevorzugt für O (Sauerstoff) oder S (Schwefel).

$Q^2$ steht bevorzugt für O (Sauerstoff) oder S (Schwefel).

$R^1$ steht bevorzugt für jeweils gegebenenfalls durch Cyano, Fluor, Chlor, Methoxy oder Ethoxy substituiertes Methyl, Ethyl, n- oder i-Propyl, n-, i-, s- oder t-Butyl, für jeweils gegebenenfalls durch Cyano, Fluor oder Chlor sub- stituiertes Propenyl, Butenyl, Propinyl oder Butinyl, für jeweils gegebenenfalls durch Cyano, Fluor, Chlor, Methyl oder Ethyl substituiertes Cyclopropyl, Cyclobutyl, Cyclopentyl, Cyclohexyl, Cyclopropylmethyl, Cyclobutylmethyl, Cyclopentylmethyl oder Cyclohexylmethyl, für jeweils gegebenenfalls durch Cyano, Fluor, Chlor, Brom, Methyl, Ethyl, n- oder i-Propyl, Trifluormethyl, Methoxy, Ethoxy, n- oder i-Propoxy, Difluormethoxy oder Trifluormethoxy substituiertes Phenyl, Phenylmethyl oder Phenylethyl, oder für jeweils gege- benenfalls durch Cyano, Fluor, Chlor, Brom, Methyl, Ethyl, n- oder i-Propyl, Methoxy, Ethoxy, n- oder i-Propoxy substituiertes Heterocyclyl oder Hetero- cyclylmethyl, wobei die Heterocyclylgruppe jeweils aus der Reihe Oxetanyl, Thietanyl, Furyl, Tetrahydrofuryl, Thienyl, Tetrahydrothienyl aus-

gewählt ist.

$R^2$ steht bevorzugt für Wasserstoff, Cyano, Fluor, Chlor, Brom, für jeweils gege- benenfalls durch Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, Methoxycarbonyl, Ethoxycarbonyl, n- oder i-Propoxy- carbonyl, Methylthio, Ethylthio, n- oder i-Propylthio, Methylsulfinyl, Ethyl- sulfinyl, Methylsulfonyl oder Ethylsulfonyl, oder für jeweils gegebenenfalls durch Cyano, Fluor oder Chlor substituiertes Propenyl, Butenyl, Propinyl, Butinyl, Propenyloxy, Butenyloxy, Propinyloxy oder Butinyloxy.

$R^3$ steht bevorzugt für Wasserstoff, Hydroxy, Mercapto, Amino, Cyano, Fluor, Chlor, Brom, für jeweils gegebenenfalls durch Fluor, Chlor, Cyano, Methoxy, Ethoxy, n- oder i-Propoxy, Acetyl, Propionyl, n- oder i-Butyroyl, Methoxy- carbonyl, Ethoxycarbonyl, n- oder i-Propoxy-carbonyl substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Ethinyl, Propinyl oder Butinyl, für jeweils gegebenenfalls durch Fluor, Chlor, Cyano, Methoxy, Ethoxy, n- oder i-Propoxy, Methoxycarbonyl, Ethoxycarbonyl, n- oder i-Propoxycarbonyl substituiertes Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Acetylamino oder Propionylamino, für Propenyloxy, Butenyloxy, Ethinyloxy, Propinyloxy, Butinyloxy, Propenylthio, Butenylthio, Propinylthio, Butinylthio, Propenylamino, Butenylamino, Propinylamino oder Butinylamino, für Dimethylamino, Diethylamino oder Dipropylamino, für jeweils gegebenenfalls durch Fluor, Chlor, Methyl und/oder Ethyl substitu- iertes Cyclopropyl, Cyclobutyl, Cyclopentyl, Cyclohexyl, Cyclopentenyl, Cyclohexenyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclo- propylamino, Cyclobutylamino, Cyclopentylamino, Cyclohexylamino, Cyclo- propylmethyl, Cyclobutylmethyl, Cyclopentylmethyl, Cyclohexylmethyl, Cyclopropylmethoxy, Cyclobutylmethoxy, Cyclopentylmethoxy, Cyclohexyl- methoxy, Cyclopropylmethylthio, Cyclobutylmethylthio, Cyclopentylmethyl- thio, Cyclohexylmethylthio, Cyclopropylmethylamino, Cyclobutylmethyl- amino, Cyclopentylmethylamino oder Cyclohexylmethylamino, oder für jeweils gegebenenfalls durch Fluor, Chlor, Brom, Methyl, Trifluormethyl, Methoxy oder Methoxy-carbonyl substituiertes Phenyl, Benzyl, Phenoxy, Benzyloxy, Phenylthio, Benzylthio, Phenylamino oder Benzylamino.

$R^4$ steht bevorzugt für Wasserstoff, Hydroxy, Amino, für jeweils gegebenenfalls durch Fluor, Chlor, Cyano, Methoxy oder Ethoxy substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Propinyl oder Butinyl, für jeweils gegebenenfalls durch Fluor, Chlor, Cyano, Methoxy oder Ethoxy substituiertes Methoxy, Ethoxy, n- oder i-Propoxy, n-, i-, s- oder t- Butoxy, Methylamino, Ethylamino, n- oder i-Propylamino, n-, i-, s- oder t- Butylamino, für Propenyloxy oder Butenyloxy, für Dimethylamino oder Di- ethylamino, für jeweils gegebenenfalls durch Fluor, Chlor, Methyl und/oder Ethyl substituiertes Cyclopropyl, Cyclobutyl, Cyclopentyl, Cyclohexyl, Cyclo- propylamino, Cyclobutylamino, Cyclopentylamino, Cyclohexylamino, Cyclopropylmethyl, Cyclobutylmethyl, Cyclopentylmethyl oder Cyclohexylmethyl, oder für jeweils gegebenenfalls durch Fluor, Chlor, Methyl, Trifluormethyl und/oder Methoxy substituiertes Phenyl oder Benzyl.

$R^3$ und $R^4$ stehen auch bevorzugt zusammen für Trimethylen (Propan-1,3-diyl), Tetra- methylen (Butan-1,4-diyl) oder Pentamethylen (Pentan-1,5-diyl).

$Q^1$ steht besonders bevorzugt für O (Sauerstoff).

$Q^2$ steht besonders bevorzugt für O (Sauerstoff).

$R^1$ steht besonders bevorzugt für jeweils gegebenenfalls durch Fluor, Chlor, Methoxy oder Ethoxy substituiertes Methyl, Ethyl, n- oder i-Propyl,

$R^2$ steht besonders bevorzugt für Fluor, Chlor, Brom oder für jeweils gegebenen- falls durch Fluor, Chlor, Methoxy oder Ethoxy substituiertes Methyl, Ethyl, n- oder i-Propyl.

$R^3$ steht besonders bevorzugt für Wasserstoff, Chlor, Brom, für jeweils gege- benenfalls durch Fluor, Chlor, Methoxy, Ethoxy, n- oder i-Propoxy substitu- iertes Methyl, Ethyl, n- oder i-Propyl, für jeweils gegebenenfalls durch Fluor oder Chlor substituiertes Ethenyl, Propenyl, Butenyl, Propinyl oder Butinyl, für jeweils

gegebenenfalls durch Fluor, Chlor, Methoxy, Ethoxy, n- oder i- Propoxy substituiertes Methoxy, Ethoxy, n- oder i-Propoxy, Methylthio, Ethylthio, n- oder i-Propylthio, Methylamino, Ethylamino, n- oder i-Propylamino, für Propenyloxy, Propinyloxy, Propenylthio, Propinylthio, Propenyl- amino oder Propinylamino, für Dimethylamino oder Diethylamino, für jeweils gegebenenfalls durch Fluor, Chlor oder Methyl substituiertes Cyclopropyl, Cyclopropyloxy, Cyclopropylmethyl oder Cyclopropylmethoxy.

$R^4$ steht besonders bevorzugt für jeweils gegebenenfalls durch Fluor, Chlor, Methoxy oder Ethoxy substituiertes Methyl, Ethyl, n- oder i-Propyl, für je- weils gegebenenfalls durch Fluor oder Chlor substituiertes Ethenyl, Propenyl oder Propinyl, für jeweils gegebenenfalls durch Fluor, Chlor, Methoxy oder Ethoxy substituiertes Methoxy, Ethoxy, n- oder i-Propoxy, für Methylamino, oder für Cyclopropyl.

Als bevorzugte Wirkstoff-Komponenten der Gruppe 1 sind insbesondere auch die Natrium-, Kalium-, Magnesium-, Calcium-, Ammonium-, $C_1$-$C_4$-Alkyl-ammonium-, Di-($C_1$-$C_4$-alkyl)-ammonium-, Tri-($C_1$-$C_4$-alkyl)-ammonium-, Tetra-($C_1$-$C_4$-alkyl)-ammonium, Tri-($C_1$-$C_4$-alkyl)-sulfonium-, $C_5$- oder $C_6$-Cycloalkyl-ammonium- und Di-($C_1$-$C_2$-alkyl)-benzyl-ammonium-Salze von Verbindungen der Formel (I), in welcher $Q^1$, $Q^2$, $R^1$, $R^2$, $R^3$ und $R^4$ die oben vorzugsweise angegebenen Bedeutungen haben, hervorzuheben.

Beispiele für die als erfindungsgemäße Wirkstoff-Komponenten ganz besonders bevorzugten Verbindungen der Formel (I) sind in der nachstehenden Tabelle 1 aufgeführt. Auch die Natriumsalze der Verbindungen aus Tabelle 1, insbesondere die Natriumsalze der Verbindungen I-1 und I-2, seien als erfindungsgemäße Wirkstoff-Komponenten ganz besonders hervorgehoben.

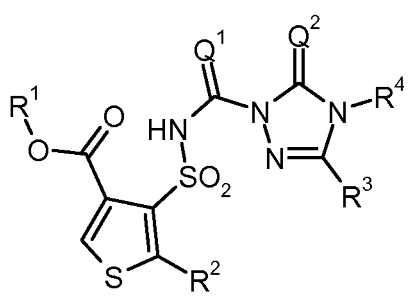

(I)

Tabelle 1: Beispiele für die Verbindungen der Formel (I)

| Bsp.-Nr. | $Q^1$ | $Q^2$ | $R^1$ | $R^2$ | $R^3$ | $R^4$ | Schmelzpunkt (°C) |
|---|---|---|---|---|---|---|---|
| I-1 | O | O | $CH_3$ | $CH_3$ | $OC_2H_5$ | $CH_3$ | 163 |
| I-2 | O | O | $CH_3$ | $CH_3$ | $OCH_3$ | $CH_3$ | 201 |
| I-3 | O | O | $CH_3$ | $CH_3$ | $OC_3H_7$-n | $CH_3$ | 156 |
| I-4 | O | O | $CH_3$ | $CH_3$ | $OC_3H_7$-i | $CH_3$ | 150 |
| I-5 | O | O | $CH_3$ | $CH_3$ | $OCH_3$ | 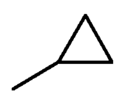 | 218 |
| I-6 | O | O | $CH_3$ | $CH_3$ | $OC_2H_5$ | 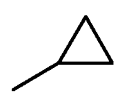 | 170 |
| I-7 | O | O | $CH_3$ | $CH_3$ | $OC_3H_7$-n | 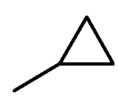 | 156 |

(fortgesetzt)

| Bsp.-Nr. | $Q^1$ | $Q^2$ | $R^1$ | $R^2$ | $R^3$ | $R^4$ | Schmelzpunkt (°C) |
|---|---|---|---|---|---|---|---|
| I-8 | O | O | $CH_3$ | $CH_3$ | $OC_3H_7$-i | 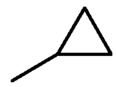 | 188 |
| I-9 | O | O | $CH_3$ | $CH_3$ | 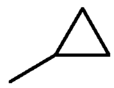 | 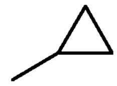 | 200 |
| I-10 | O | O | $CH_3$ | $CH_3$ | $CH_3$ | $CH_3$ | 178 |
| I-11 | O | O | $CH_3$ | $CH_3$ | $C_2H_5$ | $CH_3$ | 161 |
| I-12 | O | O | $CH_3$ | $CH_3$ | $SCH_3$ | $CH_3$ | 183 |

Die Wirkstoffe der Gruppe 2 können ihrer chemischen Struktur entsprechend folgenden Wirkstoffklassen zugeordnet werden:

Amide (z.B. Isoxaben, Picolinafen, Propanil), Arylheterocyclen (z.B. Azafenidin, Benzfendizone, Butafenacil-allyl, Carfentrazone-ethyl, Cinidon-ethyl, Fluazolate, Flumiclorac-pentyl, Flumioxazin, Flupropacil, Fluthiacet-methyl, Oxadiazon, Oxadiargyl, Profluazol, Pyraflufen-ethyl, Pyridate, Pyridafol, Sulfentrazone, 4-[4,5-Dihydro-4-methyl-5-oxo-(3-trifluormethyl)-1H-1,2,4-triazol-1-yl]-2-[(ethylsulfonyl)amino]-5-fluor-benzolcarbothioamid), Aryloxyphenoxypropionate (z.B. Clodinafop-propargyl, Cyhalofop-butyl, Diclofop-methyl, Fenoxaprop-P-ethyl, Fluazifop-P-butyl, Haloxyfop-P-methyl, Quizalofop-P-ethyl), Carbonsäurederivate (z.B. Clopyralid, Dicamba, Fluroxypyr, Picloram, Triclopyr), Benzothiadiazole (z.B. Bentazone), Chloracetamide (z.B. Acetochlor, Alachlor, Butachlor, (S-) Dimethenamid, Metazachlor, Metolachlor, Pretilachlor, Propachlor, Propisochlor), Cyclohexandione (z.B. Butroxydim, Clefoxydim, Cycloxydim, Sethoxydim, Tralkoxydim), Dinitroaniline (z.B. Benfluralin, Ethalfluralin, Oryzalin, Pendimethalin, Trifluralin), Diphenylether (z.B. Acifluorfen-sodium, Aclonifen, Bifenox, Fluoroglycofen-ethyl, Fomesafen, Lactofen, Oxyfluorfen), Harnstoffe (z.B. Chlortoluron, Diuron, Isoproturon, Linuron, Metobromuron, Metoxuron), Imidazolinone (z.B. Imazamethabenz-methyl, Imazamox, Imazaquin, Imazethapyr), Isoxazole (z.B. Isoxaflutole), Nicotinanilide (z.B. Diflufenican), Nitrile (z.B. Bromoxynil, Ioxynil), Organophosphor-Verbindungen (z.B. Anilofos, Glufosinate-ammonium, Glyphosate-isopropylammonium, Sulfosate), Oxyacetamide (z.B. Flufenacet, Mefenacet), Phenoxycarbonsäurederivate (z.B. 2,4-D, Dichlorprop-P, MCPA, MCPB, Mecoprop), Pyrazole (z.B. Pyrazolate, Pyrazoxyfen), Pyridazinone (z.B. Norflurazon), Pyridine (z.B. Dithiopyr, Thiazopyr), Pyrimidinyl(thio)benzoate (z.B. Bispyribac, Pyribenzoxim, Pyrithiobac, Pyriminobac), Sulfonylharnstoffe (z.B. Amidosulfuron, Azimsulfuron, Bensulfuron-methyl, Chlorimuron-ethyl, Chlorsulfuron, Cinosulfuron, Cyclosulfamuron, Ethoxysulfuron, Flupyrsulfuron-methyl-sodium, Foramsulfuron, Iodosulfuron-methyl-sodium, Imazosulfuron, Metsulfuron-methyl, Nicosulfuron, Oxasulfuron, Primisulfuron-methyl, Prosulfuron, Pyrazosulfuron-ethyl, Rimsulfuron, Sulfometuron-methyl, Sulfosulfuron, Thifensulfuron-methyl, Triasulfuron, Tribenuron-methyl, Trifloxysulfuron, Triflusulfuron-methyl, Tritosulfuron), Tetrazolinone (z.B. Fentrazamide), Thiocarbamate (z.B. Butylate, Dimepiperate, EPTC, Esprocarb, Molinate, Orbencarb, Prosulfocarb, Triallate), Triazine (z.B. Ametryn, Atrazine, Cyanazine, Dimexyflam, Simazine, Terbuthylazine, Terbutryn), Triazinone (z.B. Hexazinone, Metamitron, Metribuzin), Triazole (z.B. Amitrole), Triazolinone (z.B. Amicarbazone, Flucarbazone-sodium, Propoxycarbazone-sodium), Triazolopyrimidine (z.B. Cloransulam-methyl, Diclosulam, Florasulam, Flumetsulam, Metosulam), Triketone (z.B. Mesotrione, Sulcotrione), Uracile (z.B. Bromacil).

Als Mischungskomponenten aus den Wirkstoffen der Gruppe 2 werden besonders hervorgehoben:

Flucarbazone-sodium, Acetochlor, Aclonifen, Alachlor, Amicarbazone, Amidosulfuron, Amitrole, Anilofos, Asulam, Atrazine, Beflubutamid, Benazolin (-ethyl), Benfuresate, Bentazone, Bifenox, Bispyribac-sodium, Bromoxynil, Butylate, Carfentrazone-ethyl, Chlorotoluron, Chlorsulfuron, Cinidon-ethyl, Clodinafop-propargyl, Clopyralid, Cyanazine, 2,4-D, Desmedipham, Dicamba, Dichlorprop-P, Diclofop-methyl, Difenzoquat, Diflufenican, Diflufenzopyr, Dimethenamid, S-Dimethenamid, EPTC, Ethofumesate, Ethoxysulfuron, Fenoxaprop-ethyl, Fenoxaprop-P-ethyl, Fentrazamide, Flamprop-M-isopropyl, Flamprop-M-methyl, Florasulam, Fluazifop-P-butyl, Fluazolate, Flufenacet, Flumetsulam, Fluoroglycofen-ethyl, Flupyrsulfuron-methyl-sodium, Fluroxypyr, -butoxypropyl, -meptyl, Flurtamone, Fluthiacet-methyl, Foramsulfuron, Glufosinate, Glufosinate-ammonium, Halosulfuron-methyl, Haloxyfop-P-methyl,

Imazamethabenz-methyl, Imazamox, Imazapic, Imazapyr, Imazaquin, Imazethapyr, Iodosulfuron-methyl-sodium, Ioxynil, Isoproturon, Isoxaben, Isoxachlortole, Isoxaflutole, Lactofen, Linuron, MCPA, Mecoprop-P, Mefenacet, Mesosulfuron, Mesotrione, Metamitron, Metazachlor, Methabenzthiazuron, Metolachlor, S-Metolachlor, Metosulam, Metribuzin, Metsulfuron-methyl, Naproanilide, Neburon, Nicosulfuron, Oxadiargyl, Oxadiazon, Oxaziclomefone, Oxyfluorfen, Pendimethalin, Penoxsulam, Phenmedipham, Picolinafen, Primisulfuron-methyl, Profluazol, Propanil, Propoxycarbazone-sodium, Prosulfocarb, Prosulfuron, Pyraclonil, Pyraflufen-ethyl, Pyribenzoxim, Pyridafol, Pyridate, Qinclorac, Quinmerac, Rimsulfuron, Sulcotrione, Sulfosate, Sulfosulfuron, Terbuthylazine, Thifensulfuron-methyl, Tralkoxydim, Triallate, Triasulfuron, Tribenuron-methyl, Tritosulfuron, 4-(4,5-Dihydro-4-methyl-5-oxo-3-trifluormethyl-1H-1,2,4-triazol-1-yl)-2-(ethylsulfonylamino)-5-fluor-benzolcarbothioamid (HWH4991), 2-Chlor-N-[1-(2,6-dichlor-4-difluormethyl-phenyl)-4-nitro-1H-pyrazol-5-yl]-propancarbonsäureamid (SLA5599).

Vorzugsweise enthalten die erfindungsgemäßen Mittel einen oder zwei Wirkstoffe der Gruppe 1, ein bis drei Wirkstoffe der Gruppe 2 und gegebenenfalls einen Wirkstoff der Gruppe 3.

Insbesondere enthalten die erfindungsgemäßen Mittel einen Wirkstoff der Gruppe 1, einen oder zwei Wirkstoffe der Gruppe 2 und gegebenenfalls einen Wirkstoff der Gruppe 3.

Beispiele für erfindungsgemäße Kombinationen aus jeweils einem Wirkstoff der Gruppe 1 und ein oder zwei Wirkstoffen der Gruppe 2 - bzw. aus jeweils einem Wirkstoff der Gruppe 1, ein oder zwei Wirkstoffen der Gruppe 2 und einer Verbindung der Gruppe 3 - sind nachstehend in Tabelle 2 aufgeführt. Die Bezeichnung der Wirkstoffe der Formel (I) (Wirkstoffe der Gruppe 1) sind dabei jeweils der Tabelle 1 entnommen.

**Tabelle 2:** Beispiele für Kombinationen bestehend aus einem Wirkstoff der Gruppe 1 und einem oder zwei Wirkstoffen der Gruppe 2 (ggf. zusätzlich mit Safener)

| Wirkstoff der Gruppe 1 | Wirkstoff der Gruppe 2 |
|---|---|
| (I-1) | Aclonifen |
| (I-1) | Amicarbazone |
| (I-1) | Amidosulfuron |
| (I-1) | Amitrole |
| (I-1) | Anilofos |
| (I-1) | Asulam |
| (I-1) | Benazolin-ethyl |
| (I-1) | Benfuresate |
| (I-1) | Bifenox |
| (I-1) | Bispyribac-sodium |
| (I-1) | Bromoxynil |
| (I-1) | Desmedipham |
| (I-1) | Diclofop-methyl |
| (I-1) | Diflufenican |
| (I-1) | Ethofumesate |
| (I-1) | Ethoxysulfuron |
| (I-1) | Fenoxaprop-ethyl |
| (I-1) | Fenoxaprop-P-ethyl |
| (I-1) | Fentrazamide |
| (I-1) | Fluazifop-P-butyl |
| (I-1) | Fluazolate |
| (I-1) | Flucarbazone-sodium |
| (I-1) | Flufenacet |

(fortgesetzt)

| **Wirkstoff der Gruppe 1** | **Wirkstoff der Gruppe 2** |
|---|---|
| (I-1) | Flurtamone |
| (I-1) | Foramsulfuron |
| (I-1) | Glufosinate |
| (I-1) | Glufosinate-ammonium |
| (I-1) | Iodosulfuron |
| (I-1) | Ioxynil |
| (I-1) | Isoproturon |
| (I-1) | Isoxachlortole |
| (I-1) | Isoxaflutole |
| (I-1) | Lactofen |
| (I-1) | Linuron |
| (I-1) | Mefenacet |
| (I-1) | Mesosulfuron |
| (I-1) | Metamitron |
| (I-1) | Methabenzthiazuron |
| (I-1) | Metribuzin |
| (I-1) | Neburon |
| (I-1) | Oxadiargyl |
| (I-1) | Oxadiazon |
| (I-1) | Oxaziclomefone |
| (I-1) | Phenmedipham |
| (I-1) | Propanil |
| (I-1) | Propoxycarbazone-sodium |
| (I-1) | Pyraclonil |
| (I-1) | Pyraflufen-ethyl |
| (I-1) | Sulcotrione |
| (I-2) | Aclonifen |
| (I-2) | Amicarbazone |
| (I-2) | Amidosulfuron |
| (I-2) | Amitrole |
| (I-2) | Anilofos |
| (I-2) | Asulam |
| (I-2) | Benazolin-ethyl |
| (I-2) | Benfuresate |
| (I-2) | Bifenox |
| (I-2) | Bispyribac-sodium |
| (I-2) | Bromoxynil |
| (I-2) | Desmedipham |

(fortgesetzt)

| Wirkstoff der Gruppe 1 | Wirkstoff der Gruppe 2 |
|---|---|
| (I-2) | Diclofop-methyl |
| (I-2) | Diflufenican |
| (I-2) | Ethofumesate |
| (I-2) | Ethoxysulfuron |
| (I-2) | Fenoxaprop-ethyl |
| (I-2) | Fenoxaprop-P-ethyl |
| (I-2) | Fentrazamide |
| (I-2) | Fluazifop-P-butyl |
| (I-2) | Fluazolate |
| (I-2) | Flucarbazone-sodium |
| (I-2) | Flufenacet |
| (I-2) | Flurtamone |
| (I-2) | Foramsulfuron |
| (I-2) | Glufosinate |
| (I-2) | Glufosinate-ammonium |
| (I-2) | Iodosulfuron |
| (I-2) | Ioxynil |
| (I-2) | Isoproturon |
| (I-2) | Isoxachlortole |
| (I-2) | Isoxaflutole |
| (I-2) | Lactofen |
| (I-2) | Linuron |
| (I-2) | Mefenacet |
| (I-2) | Mesosulfuron |
| (I-2) | Metamitron |
| (I-2) | Methabenzthiazuron |
| (I-2) | Metribuzin |
| (I-2) | Neburon |
| (I-2) | Oxadiargyl |
| (I-2) | Oxadiazon |
| (I-2) | Oxaziclomefone |
| (I-2) | Phenmedipham |
| (I-2) | Propanil |
| (I-2) | Propoxycarbazone-sodium |
| (I-2) | Pyraclonil |
| (I-2) | Pyraflufen-ethyl |
| (I-2) | Sulcotrione |
| (I-3) | Aclonifen |

(fortgesetzt)

| Wirkstoff der Gruppe 1 | Wirkstoff der Gruppe 2 |
|---|---|
| (I-3) | Amicarbazone |
| (I-3) | Amidosulfuron |
| (I-3) | Amitrole |
| (I-3) | Anilofos |
| (I-3) | Asulam |
| (I-3) | Benazolin-ethyl |
| (I-3) | Benfuresate |
| (I-3) | Bifenox |
| (I-3) | Bispyribac-sodium |
| (I-3) | Bromoxynil |
| (I-3) | Desmedipham |
| (I-3) | Diclofop-methyl |
| (I-3) | Diflufenican |
| (I-3) | Ethofumesate |
| (I-3) | Ethoxysulfuron |
| (I-3) | Fenoxaprop-ethyl |
| (I-3) | Fenoxaprop-P-ethyl |
| (I-3) | Fentrazamide |
| (I-3) | Fluazifop-P-butyl |
| (I-3) | Fluazolate |
| (I-3) | Flucarbazone-sodium |
| (I-3) | Flufenacet |
| (I-3) | Flurtamone |
| (I-3) | Foramsulfuron |
| (I-3) | Glufosinate |
| (I-3) | Glufosinate-ammonium |
| (I-3) | Iodosulfuron |
| (I-3) | Ioxynil |
| (I-3) | Isoproturon |
| (I-3) | Isoxachlortole |
| (I-3) | Isoxaflutole |
| (I-3) | Lactofen |
| (I-3) | Linuron |
| (I-3) | Mefenacet |
| (I-3) | Mesosulfuron |
| (I-3) | Metamitron |
| (I-3) | Methabenzthiazuron |
| (I-3) | Metribuzin |

(fortgesetzt)

| Wirkstoff der Gruppe 1 | Wirkstoff der Gruppe 2 |
|---|---|
| (I-3) | Neburon |
| (I-3) | Oxadiargyl |
| (I-3) | Oxadiazon |
| (I-3) | Oxaziclomefone |
| (I-3) | Phenmedipham |
| (I-3) | Propanil |
| (I-3) | Propoxycarbazone-sodium |
| (I-3) | Pyraclonil |
| (I-3) | Pyraflufen-ethyl |
| (I-3) | Sulcotrione |
| (I-4) | Aclonifen |
| (I-4) | Amicarbazone |
| (I-4) | Amidosulfuron |
| (I-4) | Amitrole |
| (I-4) | Anilofos |
| (I-4) | Asulam |
| (I-4) | Benazolin-ethyl |
| (I-4) | Benfuresate |
| (I-4) | Bifenox |
| (I-4) | Bispyribac-sodium |
| (I-4) | Bromoxynil |
| (I-4) | Desmedipham |
| (I-4) | Diclofop-methyl |
| (I-4) | Diflufenican |
| (I-4) | Ethofumesate |
| (I-4) | Ethoxysulfuron |
| (I-4) | Fenoxaprop-ethyl |
| (I-4) | Fenoxaprop-P-ethyl |
| (I-4) | Fentrazamide |
| (I-4) | Fluazifop-P-butyl |
| (I-4) | Fluazolate |
| (I-4) | Flucarbazone-sodium |
| (I-4) | Flufenacet |
| (I-4) | Flurtamone |
| (I-4) | Foramsulfuron |
| (I-4) | Glufosinate |
| (I-4) | Glufosinate-ammonium |
| (I-4) | Iodosulfuron |

(fortgesetzt)

| Wirkstoff der Gruppe 1 | Wirkstoff der Gruppe 2 |
|---|---|
| (I-4) | Ioxynil |
| (I-4) | Isoproturon |
| (I-4) | Isoxachlortole |
| (I-4) | Isoxaflutole |
| (I-4) | Lactofen |
| (I-4) | Linuron |
| (I-4) | Mefenacet |
| (I-4) | Mesosulfuron |
| (I-4) | Metamitron |
| (I-4) | Methabenzthiazuron |
| (I-4) | Metribuzin |
| (I-4) | Neburon |
| (I-4) | Oxadiargyl |
| (I-4) | Oxadiazon |
| (I-4) | Oxaziclomefone |
| (I-4) | Phenmedipham |
| (I-4) | Propanil |
| (I-4) | Propoxycarbazone-sodium |
| (I-4) | Pyraclonil |
| (I-4) | Pyraflufen-ethyl |
| (I-4) | Sulcotrione |
| (I-5) | Aclonifen |
| (I-5) | Amicarbazone |
| (I-5) | Amidosulfuron |
| (I-5) | Amitrole |
| (I-5) | Anilofos |
| (I-5) | Asulam |
| (I-5) | Benazolin-ethyl |
| (I-5) | Benfuresate |
| (I-5) | Bifenox |
| (I-5) | Bispyribac-sodium |
| (I-5) | Bromoxynil |
| (I-5) | Desmedipham |
| (I-5) | Diclofop-methyl |
| (I-5) | Diflufenican |
| (I-5) | Ethofumesate |
| (I-5) | Ethoxysulfuron |
| (I-5) | Fenoxaprop-ethyl |

(fortgesetzt)

| Wirkstoff der Gruppe 1 | Wirkstoff der Gruppe 2 |
|---|---|
| (I-5) | Fenoxaprop-P-ethyl |
| (I-5) | Fentrazamide |
| (I-5) | Fluazifop-P-butyl |
| (I-5) | Fluazolate |
| (I-5) | Flucarbazone-sodium |
| (I-5) | Flufenacet |
| (I-5) | Flurtamone |
| (I-5) | Foramsulfuron |
| (I-5) | Glufosinate |
| (I-5) | Glufosinate-ammonium |
| (I-5) | Iodosulfuron |
| (I-5) | Ioxynil |
| (I-5) | Isoproturon |
| (I-5) | Isoxachlortole |
| (I-5) | Isoxaflutole |
| (I-5) | Lactofen |
| (I-5) | Linuron |
| (I-5) | Mefenacet |
| (I-5) | Mesosulfuron |
| (I-5) | Metamitron |
| (I-5) | Methabenzthiazuron |
| (I-5) | Metribuzin |
| (I-5) | Neburon |
| (I-5) | Oxadiargyl |
| (I-5) | Oxadiazon |
| (I-5) | Oxaziclomefone |
| (I-5) | Phenmedipham |
| (I-5) | Propanil |
| (I-5) | Propoxycarbazone-sodium |
| (I-5) | Pyraclonil |
| (I-5) | Pyraflufen-ethyl |
| (I-5) | Sulcotrione |
| (I-6) | Aclonifen |
| (I-6) | Amicarbazone |
| (I-6) | Amidosulfuron |
| (I-6) | Amitrole |
| (I-6) | Anilofos |
| (I-6) | Asulam |

(fortgesetzt)

| Wirkstoff der Gruppe 1 | Wirkstoff der Gruppe 2 |
|---|---|
| (I-6) | Benazolin-ethyl |
| (I-6) | Benfuresate |
| (I-6) | Bifenox |
| (I-6) | Bispyribac-sodium |
| (I-6) | Bromoxynil |
| (I-6) | Desmedipham |
| (I-6) | Diclofop-methyl |
| (I-6) | Diflufenican |
| (I-6) | Ethofumesate |
| (I-6) | Ethoxysulfuron |
| (I-6) | Fenoxaprop-ethyl |
| (I-6) | Fenoxaprop-P-ethyl |
| (I-6) | Fentrazamide |
| (I-6) | Fluazifop-P-butyl |
| (I-6) | Fluazolate |
| (I-6) | Flucarbazone-sodium |
| (I-6) | Flufenacet |
| (I-6) | Flurtamone |
| (I-6) | Foramsulfuron |
| (I-6) | Glufosinate |
| (I-6) | Glufosinate-ammonium |
| (I-6) | Iodosulfuron |
| (I-6) | Ioxynil |
| (I-6) | Isoproturon |
| (I-6) | Isoxachlortole |
| (I-6) | Isoxaflutole |
| (I-6) | Lactofen |
| (I-6) | Linuron |
| (I-6) | Mefenacet |
| (I-6) | Mesosulfuron |
| (I-6) | Metamitron |
| (I-6) | Methabenzthiazuron |
| (I-6) | Metribuzin |
| (I-6) | Neburon |
| (I-6) | Oxadiargyl |
| (I-6) | Oxadiazon |
| (I-6) | Oxaziclomefone |
| (I-6) | Phenmedipham |

(fortgesetzt)

| Wirkstoff der Gruppe 1 | Wirkstoff der Gruppe 2 |
|---|---|
| (I-6) | Propanil |
| (I-6) | Propoxycarbazone-sodium |
| (I-6) | Pyraclonil |
| (I-6) | Pyraflufen-ethyl |
| (I-6) | Sulcotrione |
| (I-7) | Aclonifen |
| (I-7) | Amicarbazone |
| (I-7) | Amidosulfuron |
| (I-7) | Amitrole |
| (I-7) | Anilofos |
| (I-7) | Asulam |
| (I-7) | Benazolin-ethyl |
| (I-7) | Benfuresate |
| (I-7) | Bifenox |
| (I-7) | Bispyribac-sodium |
| (I-7) | Bromoxynil |
| (I-7) | Desmedipham |
| (I-7) | Diclofop-methyl |
| (I-7) | Diflufenican |
| (I-7) | Ethofumesate |
| (I-7) | Ethoxysulfuron |
| (I-7) | Fenoxaprop-ethyl |
| (I-7) | Fenoxaprop-P-ethyl |
| (I-7) | Fentrazamide |
| (I-7) | Fluazifop-P-butyl |
| (I-7) | Fluazolate |
| (I-7) | Flucarbazone-sodium |
| (I-7) | Flufenacet |
| (I-7) | Flurtamone |
| (I-7) | Foramsulfuron |
| (I-7) | Glufosinate |
| (I-7) | Glufosinate-ammonium |
| (I-7) | Iodosulfuron |
| (I-7) | Ioxynil |
| (I-7) | Isoproturon |
| (I-7) | Isoxachlortole |
| (I-7) | Isoxaflutole |
| (I-7) | Lactofen |

(fortgesetzt)

| Wirkstoff der Gruppe 1 | Wirkstoff der Gruppe 2 |
|---|---|
| (I-7) | Linuron |
| (I-7) | Mefenacet |
| (I-7) | Mesosulfuron |
| (I-7) | Metamitron |
| (I-7) | Methabenzthiazuron |
| (I-7) | Metribuzin |
| (I-7) | Neburon |
| (I-7) | Oxadiargyl |
| (I-7) | Oxadiazon |
| (I-7) | Oxaziclomefone |
| (I-7) | Phenmedipham |
| (I-7) | Propanil |
| (I-7) | Propoxycarbazone-sodium |
| (I-7) | Pyraclonil |
| (I-7) | Pyraflufen-ethyl |
| (I-7) | Sulcotrione |
| (I-8) | Aclonifen |
| (I-8) | Amicarbazone |
| (I-8) | Amidosulfuron |
| (I-8) | Amitrole |
| (I-8) | Anilofos |
| (I-8) | Asulam |
| (I-8) | Benazolin-ethyl |
| (I-8) | Benfuresate |
| (I-8) | Bifenox |
| (I-8) | Bispyribac-sodium |
| (I-8) | Bromoxynil |
| (I-8) | Desmedipham |
| (I-8) | Diclofop-methyl |
| (I-8) | Diflufenican |
| (I-8) | Ethofumesate |
| (I-8) | Ethoxysulfuron |
| (I-8) | Fenoxaprop-ethyl |
| (I-8) | Fenoxaprop-P-ethyl |
| (I-8) | Fentrazamide |
| (I-8) | Fluazifop-P-butyl |
| (I-8) | Fluazolate |
| (I-8) | Flucarbazone-sodium |

(fortgesetzt)

| Wirkstoff der Gruppe 1 | Wirkstoff der Gruppe 2 |
|---|---|
| (I-8) | Flufenacet |
| (I-8) | Flurtamone |
| (I-8) | Foramsulfuron |
| (I-8) | Glufosinate |
| (I-8) | Glufosinate-ammonium |
| (I-8) | Iodosulfuron |
| (I-8) | Ioxynil |
| (I-8) | Isoproturon |
| (I-8) | Isoxachlortole |
| (I-8) | Isoxaflutole |
| (I-8) | Lactofen |
| (I-8) | Linuron |
| (I-8) | Mefenacet |
| (I-8) | Mesosulfuron |
| (I-8) | Metamitron |
| (I-8) | Methabenzthiazuron |
| (I-8) | Metribuzin |
| (I-8) | Neburon |
| (I-8) | Oxadiargyl |
| (I-8) | Oxadiazon |
| (I-8) | Oxaziclomefone |
| (I-8) | Phenmedipham |
| (I-8) | Propanil |
| (I-8) | Propoxycarbazone-sodium |
| (I-8) | Pyraclonil |
| (I-8) | Pyraflufen-ethyl |
| (I-8) | Sulcotrione |
| (I-9) | Aclonifen |
| (I-9) | Amicarbazone |
| (I-9) | Amidosulfuron |
| (I-9) | Amitrole |
| (I-9) | Anilofos |
| (I-9) | Asulam |
| (I-9) | Benazolin-ethyl |
| (I-9) | Benfuresate |
| (I-9) | Bifenox |
| (I-9) | Bispyribac-sodium |
| (I-9) | Bromoxynil |

(fortgesetzt)

| **Wirkstoff der Gruppe 1** | **Wirkstoff der Gruppe 2** |
|---|---|
| (I-9) | Desmedipham |
| (I-9) | Diclofop-methyl |
| (I-9) | Diflufenican |
| (I-9) | Ethofumesate |
| (I-9) | Ethoxysulfuron |
| (I-9) | Fenoxaprop-ethyl |
| (I-9) | Fenoxaprop-P-ethyl |
| (I-9) | Fentrazamide |
| (I-9) | Fluazifop-P-butyl |
| (I-9) | Fluazolate |
| (I-9) | Flucarbazone-sodium |
| (I-9) | Flufenacet |
| (I-9) | Flurtamone |
| (I-9) | Foramsulfuron |
| (I-9) | Glufosinate |
| (I-9) | Glufosinate-ammonium |
| (I-9) | Iodosulfuron |
| (I-9) | Ioxynil |
| (I-9) | Isoproturon |
| (I-9) | Isoxachlortole |
| (I-9) | Isoxaflutole |
| (I-9) | Lactofen |
| (I-9) | Linuron |
| (I-9) | Mefenacet |
| (I-9) | Mesosulfuron |
| (I-9) | Metamitron |
| (I-9) | Methabenzthiazuron |
| (I-9) | Metribuzin |
| (I-9) | Neburon |
| (I-9) | Oxadiargyl |
| (I-9) | Oxadiazon |
| (I-9) | Oxaziclomefone |
| (I-9) | Phenmedipham |
| (I-9) | Propanil |
| (I-9) | Propoxycarbazone-sodium |
| (I-9) | Pyraclonil |
| (I-9) | Pyraflufen-ethyl |
| (I-9) | Sulcotrione |

(fortgesetzt)

| Wirkstoff der Gruppe 1 | Wirkstoff der Gruppe 2 |
|---|---|
| (I-10) | Aclonifen |
| (I-10) | Amicarbazone |
| (I-10) | Amidosulfuron |
| (I-10) | Amitrole |
| (I-10) | Anilofos |
| (I-10) | Asulam |
| (I-10) | Benazolin-ethyl |
| (I-10) | Benfuresate |
| (I-10) | Bifenox |
| (I-10) | Bispyribac-sodium |
| (I-10) | Bromoxynil |
| (I-10) | Desmedipham |
| (I-10) | Diclofop-methyl |
| (I-10) | Diflufenican |
| (I-10) | Ethofumesate |
| (I-10) | Ethoxysulfuron |
| (I-10) | Fenoxaprop-ethyl |
| (I-10) | Fenoxaprop-P-ethyl |
| (I-10) | Fentrazamide |
| (I-10) | Fluazifop-P-butyl |
| (I-10) | Fluazolate |
| (I-10) | Flucarbazone-sodium |
| (I-10) | Flufenacet |
| (I-10) | Flurtamone |
| (I-10) | Foramsulfuron |
| (I-10) | Glufosinate |
| (I-10) | Glufosinate-ammonium |
| (I-10) | Iodosulfuron |
| (I-10) | Ioxynil |
| (I-10) | Isoproturon |
| (I-10) | Isoxachlortole |
| (I-10) | Isoxaflutole |
| (I-10) | Lactofen |
| (I-10) | Linuron |
| (I-10) | Mefenacet |
| (I-10) | Mesosulfuron |
| (I-10) | Metamitron |
| (I-10) | Methabenzthiazuron |

(fortgesetzt)

| Wirkstoff der Gruppe 1 | Wirkstoff der Gruppe 2 |
|---|---|
| (I-10) | Metribuzin |
| (I-10) | Neburon |
| (I-10) | Oxadiargyl |
| (I-10) | Oxadiazon |
| (I-10) | Oxaziclomefone |
| (I-10) | Phenmedipham |
| (I-10) | Propanil |
| (I-10) | Propoxycarbazone-sodium |
| (I-10) | Pyraclonil |
| (I-10) | Pyraflufen-ethyl |
| (I-10) | Sulcotrione |
| (I-11) | Aclonifen |
| (I-11) | Amicarbazone |
| (I-11) | Amidosulfuron |
| (I-11) | Amitrole |
| (I-11) | Anilofos |
| (I-11) | Asulam |
| (I-11) | Benazolin-ethyl |
| (I-11) | Benfuresate |
| (I-11) | Bifenox |
| (I-11) | Bispyribac-sodium |
| (I-11) | Bromoxynil |
| (I-11) | Desmedipham |
| (I-11) | Diclofop-methyl |
| (I-11) | Diflufenican |
| (I-11) | Ethofumesate |
| (I-11) | Ethoxysulfuron |
| (I-11) | Fenoxaprop-ethyl |
| (I-11) | Fenoxaprop-P-ethyl |
| (I-11) | Fentrazamide |
| (I-11) | Fluazifop-P-butyl |
| (I-11) | Fluazolate |
| (I-11) | Flucarbazone-sodium |
| (I-11) | Flufenacet |
| (I-11) | Flurtamone |
| (I-11) | Foramsulfuron |
| (I-11) | Glufosinate |
| (I-11) | Glufosinate-ammonium |

(fortgesetzt)

| **Wirkstoff der Gruppe 1** | **Wirkstoff der Gruppe 2** |
|---|---|
| (I-11) | Iodosulfuron |
| (I-11) | Ioxynil |
| (I-11) | Isoproturon |
| (I-11) | Isoxachlortole |
| (I-11) | Isoxaflutole |
| (I-11) | Lactofen |
| (I-11) | Linuron |
| (I-11) | Mefenacet |
| (I-11) | Mesosulfuron |
| (I-11) | Metamitron |
| (I-11) | Methabenzthiazuron |
| (I-11) | Metribuzin |
| (I-11) | Neburon |
| (I-11) | Oxadiargyl |
| (I-11) | Oxadiazon |
| (I-11) | Oxaziclomefone |
| (I-11) | Phenmedipham |
| (I-11) | Propanil |
| (I-11) | Propoxycarbazone-sodium |
| (I-11) | Pyraclonil |
| (I-11) | Pyraflufen-ethyl |
| (I-11) | Sulcotrione |
| (I-12) | Aclonifen |
| (I-12) | Amicarbazone |
| (I-12) | Amidosulfuron |
| (I-12) | Amitrole |
| (I-12) | Anilofos |
| (I-12) | Asulam |
| (I-12) | Benazolin-ethyl |
| (I-12) | Benfuresate |
| (I-12) | Bifenox |
| (I-12) | Bispyribac-sodium |
| (I-12) | Bromoxynil |
| (I-12) | Desmedipham |
| (I-12) | Diclofop-methyl |
| (I-12) | Diflufenican |
| (I-12) | Ethofumesate |
| (I-12) | Ethoxysulfuron |

(fortgesetzt)

| **Wirkstoff der Gruppe 1** | **Wirkstoff der Gruppe 2** |
|---|---|
| (I-12) | Fenoxaprop-ethyl |
| (I-12) | Fenoxaprop-P-ethyl |
| (I-12) | Fentrazamide |
| (I-12) | Fluazifop-P-butyl |
| (I-12) | Fluazolate |
| (I-12) | Flucarbazone-sodium |
| (I-12) | Flufenacet |
| (I-12) | Flurtamone |
| (I-12) | Foramsulfuron |
| (I-12) | Glufosinate |
| (I-12) | Glufosinate-ammonium |
| (I-12) | Iodosulfuron |
| (I-12) | Ioxynil |
| (I-12) | Isoproturon |
| (I-12) | Isoxachlortole |
| (I-12) | Isoxaflutole |
| (I-12) | Lactofen |
| (I-12) | Linuron |
| (I-12) | Mefenacet |
| (I-12) | Mesosulfuron |
| (I-12) | Metamitron |
| (I-12) | Methabenzthiazuron |
| (I-12) | Metribuzin |
| (I-12) | Neburon |
| (I-12) | Oxadiargyl |
| (I-12) | Oxadiazon |
| (I-12) | Oxaziclomefone |
| (I-12) | Phenmedipham |
| (I-12) | Propanil |
| (I-12) | Propoxycarbazone-sodium |
| (I-12) | Pyraclonil |
| (I-12) | Pyraflufen-ethyl |
| (I-12) | Sulcotrione |
| (I-1) | Fenoxaprop-P-ethyl + Mefenpyr-diethyl |
| (I-2) | Fenoxaprop-P-ethyl + Mefenpyr-diethyl |
| (I-3) | Fenoxaprop-P-ethyl + Mefenpyr-diethyl |
| (I-4) | Fenoxaprop-P-ethyl + Mefenpyr-diethyl |
| (I-5) | Fenoxaprop-P-ethyl + Mefenpyr-diethyl |

(fortgesetzt)

| Wirkstoff der Gruppe 1 | Wirkstoff der Gruppe 2 |
|---|---|
| (I-6) | Fenoxaprop-P-ethyl + Mefenpyr-diethyl |
| (I-7) | Fenoxaprop-P-ethyl + Mefenpyr-diethyl |
| (I-8) | Fenoxaprop-P-ethyl + Mefenpyr-diethyl |
| (I-9) | Fenoxaprop-P-ethyl + Mefenpyr-diethyl |
| (I-10) | Fenoxaprop-P-ethyl + Mefenpyr-diethyl |
| (I-11) | Fenoxaprop-P-ethyl + Mefenpyr-diethyl |
| (I-12) | Fenoxaprop-P-ethyl + Mefenpyr-diethyl |
| (I-1) | Fenoxaprop-P-ethyl + Isoxadifen-ethyl |
| (I-2) | Fenoxaprop-P-ethyl + Isoxadifen-ethyl |
| (I-3) | Fenoxaprop-P-ethyl + Isoxadifen-ethyl |
| (I-4) | Fenoxaprop-P-ethyl + Isoxadifen-ethyl |
| (I-5) | Fenoxaprop-P-ethyl + Isoxadifen-ethyl |
| (I-6) | Fenoxaprop-P-ethyl + Isoxadifen-ethyl |
| (I-7) | Fenoxaprop-P-ethyl + Isoxadifen-ethyl |
| (I-8) | Fenoxaprop-P-ethyl + Isoxadifen-ethyl |
| (I-9) | Fenoxaprop-P-ethyl + Isoxadifen-ethyl |
| (I-10) | Fenoxaprop-P-ethyl + Isoxadifen-ethyl |
| (I-11) | Fenoxaprop-P-ethyl + Isoxadifen-ethyl |
| (I-12) | Fenoxaprop-P-ethyl + Isoxadifen-ethyl |

Es wurde nun überraschend gefunden, dass die vorstehend definierten Wirkstoffkombinationen aus den substituierten Thien-3-yl-sulfonylamino(thio)carbonyl-triazolin(thi)-onen der Formel (I) und/oder ihren Salzen und den vorstehend angeführten Wirkstoffen der Gruppe 2 bei sehr guter Nutzpflanzen-Verträglichkeit eine besonders hohe herbizide Wirksamkeit aufweisen und in verschiedenen Kulturen, vor allem in Baumwolle, Gerste, Kartoffeln, Mais, Raps, Reis, Roggen, Soja, Sonnenblumen, Weizen, Zuckerrohr und Zuckerrüben, insbesondere in Gerste, Mais, Reis und Weizen, zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) 0,001 bis 1000 Gewichtsteile, vorzugsweise 0,002 bis 500 Gewichtsteile und besonders bevorzugt 0,01 bis 100 Gewichtsteile Wirkstoff der Gruppe 2.

Als Mischungskomponenten aus den Wirkstoffen der Gruppe 3 werden besonders hervorgehoben:

5-Chlor-chinoxalin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl) besonders geeignet zur Verbesserung der Verträglichkeit in Gerste und Weizen sowie in gewissem Umfang auch in Mais und Reis, sowie 4-Dichloracetyl-1-oxa-4-aza-spiro[4.5]-decan (AD-67), 1-Dichloracetyl-hexahydro-3,3,8a-trimethyl-pyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 3-Dichloracetyl-5-(2-furanyl)-2,2-dimethyl-oxazolidin (Furilazole, MON-13900) und 3-Dichloracetyl-2,2,5-trimethyl-oxazolidin (R-29148), besonders geeignet zur Verbesserung der Verträglichkeit in Mais.

Es ist als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe 3 geeignet sind, die schädigende Wirkung von Wirkstoffen der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Überraschenderweise wurde zudem gefunden, dass auch die herbizid wirksame Substanz 2,4-Dichlorophenoxy-essigsäure (2,4-D) und ihre Derivate die oben beschriebene Safeneraufgabe übernehmen können.

Eine bevorzugte Ausführungsform ist daher auch eine Mischung enthaltend eine Verbindung der Formel (I) und/oder deren Salze einerseits und 2,4-D und/oder dessen Derivate andererseits, gegebenenfalls in Kombination mit einem oder mehreren der oben angeführten Wirkstoffe der Gruppe 2. Typische Derivate von 2,4-D sind z.B. deren Ester.

Überraschenderweise wurde ebenfalls gefunden, dass auch die herbizid wirksamen Substanzen (4-Chlor-2-methylphenoxy)essigsäure (MCPA) und (+-)-2-(4-Chlor-2-methyl-phenoxy)propansäure (Mecoprop) eine Safeneraufgabe übernehmen können. Die genannten Verbindungen sind in den folgenden Patentanmeldungen beschrieben: JP 63 072 605 und GB 00 820 180.

Die Verbindungen Diethyl-1-(2,4-dichlorophenyl)-4,5-dihydro-5-methyl-1H-pyrazole-3,5-dicarboxylate (Mefenpyr-diethyl), (1-Methyl-hexyl)-[(5-chloro-8-quinolinyl)oxy]acetate (Cloquintocet-mexyl) und Ethyl-1-(2,4-dichlorophenyl)-5-(trichloromethyl)-1H-1,2,4-triazole-3-carboxylate (Fenchlorazole-ethyl) sind in den folgenden Patentanmeldungen beschrieben: DE-A-39 39 503, EP- A-191 736 bzw. DE-A-35 25 205. 2,4-D ist ein bekanntes Herbizid.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) oder dessen Mischungen mit Wirkstoffen der Gruppe 2 0,001 bis 1000 Gewichtsteile, vorzugsweise 0,01 bis 100 Gewichtsteile und besonders bevorzugt 0,1 bis 10 Gewichtsteile einer der oben unter (c) genannten, die Kulturpflanzen Verträglichkeit verbessernden Verbindungen (Antidots/Safener). Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. ALS-, 4-HPPD-, EPSP- und/oder PPO-Hemmstoffe tolerieren, wie z.B. Acuron-Pflanzen.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen, vorzugsweise zwischen 0,5 und 90 %.

Die erfindungsgemäßen Wirkstoffkombinationen werden im Allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol" ) oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X = % Schädigung durch Herbizid A (Wirkstoff der Formel I) bei p kg/ha Aufwandmenge
und

Y = % Schädigung durch Herbizid B (Wirkstoff der Formel II) bei q kg/ha Aufwandmenge
und

E = die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die zu erwartende Wirkung für eine gegebene Kombination dreier Herbizide kann ebenfalls der oben angegebenen Literatur entnommen werden.

**Anwendungsbeispiele:**

**Beispiel A**

Post-emergence-Test / Gewächshaus

Testpflanzen werden unter kontrollierten Bedingungen (Temperatur und Licht) herangezogen. Sobald die Pflanzen eine Wuchshöhe von 5 bis 15 cm erreicht haben, wird die Testsubstanz bzw. die Kombination der Testsubstanzen in der Weise aufgespritzt, dass die jeweils gewünschten Wirkstoffmengen pro Flächeneinheit ausgebracht werden. Die Konzentration der Spritzbrühe wird so gewählt, dass in 500 Liter Wasser/ha die jeweils gewünschten Wirkstoffinengen ausgebracht werden.

Nach der Spritzanwendung werden die Pflanzgefäße im Gewächshaus bei konstanten Licht- und Temperaturbedingungen untergebracht.

Nach drei Wochen wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)
100 % = totale Vernichtung

Wirkstoffe, Aufwandmengen, Testpflanzen und Resultate gehen aus den nachfolgenden Tabellen hervor.
a.i. steht darin für "active ingredient" (Wirkstoff).

**Tabelle A-1**

| Wirkstoff bzw. Wirkstoffkombination | Aufwandmenge (n) (g a.i./ha) | Wirkung gegen Chenopodium album (%) | Berechnete Wirkung nach Colby (%) |
|---|---|---|---|
| (I-2) | 8 | 70 | |
| Bromoxynil | 250 | 80 | |
| (I-2) + Bromoxynil | 8 + 250 | 100 | 94 |

**Tabelle A-2**

| Wirkstoff bzw. Wirk stoffkombination | Aufwandmenge (n) (g a.i./ha) | Wirkung gegen Abutilon theophrasti (%) | Berechnete Wirkung nach Colby (%) | Wirkung gegen Xanthium strumarum (%) | Berechnete Wirkung nach Colby (%) |
|---|---|---|---|---|---|
| (I-2) | 8 | 70 | | | |
| Metosulam | 25 | 70 | | 90 | |
| Metosulam | 12,5 | 60 | | 60 | |
| (I-2) + Metosulam | 8 + 25 | 95 | 91 | 100 | 97 |
| (I-2) + Metosulam | 8 + 12,5 | 95 | 88 | 100 | 88 |

**Tabelle A-1-1**

| | **Aufw.-menge g ai/ha** | **Bromus secalinus** beobachtet | **Bromus secalinus** errechnet* |
|---|---|---|---|
| **I-2** | 15<br>4 | 70<br>70 | |
| Flucarbazone-sodium | 60 | 70 | |
| I-2 + Flucarbazone-sodium | 15+60<br>4+60 | 100<br>100 | 91<br>91 |

**Tabelle A-1-2**

| | **Aufw.-menge g ai/ha** | **Veronica persicaria** beobachtet | **Veronica persicaria** errechnet* |
|---|---|---|---|
| I-2 | 15 | 60 | |
| Flucarbazone-sodium | 60 | 60 | |

(fortgesetzt)

| | **Aufw.-menge g ai/ha** | **Veronica persicaria** beobachtet | **Veronica persicaria** errechnet* |
|---|---|---|---|
| | 30 | 20 | |
| I-2 + Flucarbazone-sodium | 15+60<br>15+30 | 98<br>80 | 84<br>68 |
| * Werte errechnet nach Colby | | | |

**Tabelle A-1-3**

| | **Aufw.-menge g ai/ha** | **Viola arvensis** beobachtet | **Viola arvensis** errechnet* |
|---|---|---|---|
| I-2 | 8<br>4 | 50<br>40 | |
| Flucarbazone-sodium | 15 | 30 | |
| I-2 + Flucarbazone-sodium | 8+15<br>4+15 | 80<br>80 | 65<br>58 |

**Tabelle A-1-4**

| | **Aufw.-menge g ai/ha** | **Setaria viridis** beobachtet | **Setaria viridis** errechnet* |
|---|---|---|---|
| I-2 | 8<br>4 | 90<br>80 | |
| Amidosulfuron | 15<br>8 | 30<br>0 | |
| I-2 + Amidosulfuron | 8+15<br>4+15<br>8+8<br>4+8 | 98<br>98<br>98<br>95 | 93<br>86<br>90<br>80 |
| * Werte errechnet nach Colby | | | |

**Tabelle A-1-5**

| | **Aufw.-menge g ai/ha** | **Avena fatua** beobachtet | **Avena fatua** errechnet* |
|---|---|---|---|
| **I-2** | 4 | 80 | |
| Amidosulfuron | 15<br>8 | 0<br>0 | |
| I-2 + Amidosulfuron | 4+15<br>4+8 | 90<br>90 | 80<br>80 |

**Tabelle A-1-6**

| | **Aufw.-menge g ai/ha** | **Bromus secalinus** beobachtet | **Bromus secalinus** errechnet* |
|---|---|---|---|
| **I-2** | 15 | 70 | |
| Amidosulfuron | 8 | 0 | |
| I-2 + Amidosulfuron | 15+8 | 90 | 70 |
| * Werte errechnet nach Colby | | | |

**Tabelle A-1-7**

| | **Aufw.-menge g ai/ha** | **Alopecurus myosuroides** beobachtet | **Alopecurus myosuroides errechnet*** |
|---|---|---|---|
| I-2 | 15<br>8<br>4 | 90<br>90<br>70 | |
| Carfentrazone-ethyl | 8 | 0 | |
| I-2 + Carfentrazone-ethyl | 15+8<br>8+8<br>4+8 | 98<br>95<br>80 | 90<br>90<br>70 |

**Tabelle A-1-8**

| | **Aufw.-menge g ai/ha** | **Cyperus esculentus** beobachtet | **Cyperus esculentus** errechnet* |
|---|---|---|---|
| **I-2** | 15 | 70 | |
| Carfentrazone-ethyl | 8<br>4 | 30<br>0 | |
| I-2 + Carfentrazone-ethyl | 15+8<br>15+4 | 100<br>90 | 79<br>70 |
| * Werte errechnet nach Colby | | | |

**Tabelle A-1-9**

| | **Aufw.-menge g ai/ha** | **Chenopodium album** beobachtet | **Chenopodium album** errechnet* |
|---|---|---|---|
| I-2 | 8<br>4 | 85<br>70 | |

(fortgesetzt)

| | **Aufw.-menge g ai/ha** | **Chenopodium album** beobachtet | **Chenopodium album** errechnet* |
|---|---|---|---|
| Carfentrazone-ethyl | 8<br>4<br>2 | 50<br>30<br>0 | |
| I-2 + Carfentrazone-ethyl | 8+8<br>4+8<br>8+4<br>4+4<br>8+2<br>4+2 | 98<br>95<br>98<br>90<br>98<br>80 | 92,5<br>85<br>89,5<br>79<br>85<br>70 |

**Tabelle A-1-10**

| | **Aufw.-menge g ai/ha** | **Alopecurus myosuroides** beobachtet | **Alopecurus myosuroides** errechnet* |
|---|---|---|---|
| I-2 | 15 | 90 | |
| Dicamba | 60<br>30 | 0<br>0 | |
| I-2 + Dicamba | 15+60<br>15+30 | 98<br>95 | 90<br>90 |
| * Werte errechnet nach Colby | | | |

**Tabelle A-1-11**

| | **Aufw.-menge g ai/ha** | Cyperus esculentus beobachtet | Cyperus esculentus errechnet* |
|---|---|---|---|
| I-2 | 15 | 70 | |
| Dicamba | 125<br>30 | 0<br>0 | |
| I-2 + Dicamba | 15+125<br>15+30 | 95<br>90 | 70<br>70 |

**Tabelle A-1-12**

| | **Aufw.-menge g ai/ha** | **Veronica persicaria** beobachtet | **Veronica persicaria** errechnet* |
|---|---|---|---|
| I-2 | 15<br>8 | 40<br>0 | |
| Dicamba | 60 | 40 | |

(fortgesetzt)

| | **Aufw.-menge g ai/ha** | **Veronica persicaria** beobachtet | **Veronica persicaria** errechnet* |
|---|---|---|---|
| | | | |
| I-2 + Dicamba | 15+60<br>8+60 | 80<br>60 | 64<br>40 |
| * Werte errechnet nach Colby | | | |

**Tabelle A-1-13**

| | **Aufw.-menge g ai/ha** | **Alopecurus myosuroides** beobachtet | Alopecurus myosuroides errechnet* |
|---|---|---|---|
| I-2 | 15 | 80 | |
| Diflufenican | 125<br>60<br>30 | 70<br>50<br>50 | |
| I-2 + Diflufenican | 15+125<br>15+60<br>15+30 | 100<br>95<br>95 | 94<br>90<br>90 |

**Tabelle A-1-14**

| | **Aufw.-menge g ai/ha** | **Avena fatua** beobachtet | **Avena fatua** errechnet* |
|---|---|---|---|
| **I-2** | 15<br>8<br>4 | 70<br>70<br>70 | |
| Diflufenican | 125 | 50 | |
| I-2 + Diflufenican | 15+125<br>8+125<br>4+125 | 95<br>95<br>95 | 85<br>85<br>85 |
| * Werte errechnet nach Colby | | | |

**Tabelle A-1-15**

| | **Aufw.-menge g ai/ha** | **Bromus secalinus** beobachtet | **Bromus secalinus** errechnet* |
|---|---|---|---|
| I-2 | 4 | 80 | |
| Diflufenican | 30 | 10 | |

(fortgesetzt)

| | **Aufw.-menge g ai/ha** | **Bromus secalinus** beobachtet | **Bromus secalinus** errechnet* |
|---|---|---|---|
| I-2 + Diflufenican | 4+30 | 95 | 82 |

**Tabelle A-1-16**

| | **Aufw.-menge g ai/ha** | **Alopecurus myosuroides** beobachtet | **Alopecurus myosuroides** errechnet* |
|---|---|---|---|
| I-2 | 15<br>8 | 80<br>80 | |
| Dichlorprop-P | 250<br>125<br>60 | 20<br>0<br>0 | |
| I-2 + Dichlorprop-P | 15+250<br>8+250<br>15+125<br>8+125<br>15+60<br>8+60 | 98<br>98<br>98<br>95<br>90<br>90 | 84<br>84<br>80<br>80<br>80<br>80 |
| * Werte errechnet nach Colby | | | |

**Tabelle A-1-17**

| | **Aufw.-menge g ai/ha** | **Avena fatua** beobachtet | **Avena fatua** errechnet* |
|---|---|---|---|
| **I-2** | 15<br>8<br>4 | 70<br>70<br>70 | |
| Dichlorprop-P | 250<br>125 | 10<br>0 | |
| I-2 + Dichlorprop-P | 15+250<br>8+250<br>4+250<br>15+125<br>8+125<br>4+125 | 98<br>98<br>95<br>95<br>95<br>95 | 73<br>73<br>73<br>70<br>70<br>70 |
| * Werte errechnet nach Colby | | | |

**Tabelle A-1-18**

| | **Aufw.-menge g ai/ha** | **Matricaria inodora** beobachtet | **Matricaria inodora** errechnet* |
|---|---|---|---|
| I-2 | 15<br>4 | 95<br>70 | |
| Dichlorprop-P | 250<br>125<br>60 | 0<br>0<br>0 | |
| I-2 + Dichlorprop-P | 15+250<br>4+250<br>15+125<br>4+125<br>15+60<br>4+60 | 100<br>95<br>100<br>90<br>100<br>90 | 95<br>70<br>95<br>70<br>95<br>70 |

**Tabelle A-1-19**

| | **Aufw.-menge g ai/ha** | **Bromus secalinus** beobachtet | **Bromus secalinus** errechnet* |
|---|---|---|---|
| I-2 | 8<br>4<br>2 | 80<br>70<br>70 | |
| Bifenox | 250<br>125<br>60 | 10<br>0<br>0 | |
| I-2 + Bifenox | 8+250<br>4+250<br>2+250<br>8+125<br>4+125<br>2+125<br>8+60<br>4+60<br>2+60 | 95<br>90<br>90<br>95<br>90<br>90<br>90<br>90<br>90 | 82<br>73<br>73<br>80<br>70<br>70<br>80<br>70<br>70 |
| * Werte errechnet nach Colby | | | |

**Tabelle A-1-20**

| | **Aufw.-menge g ai/ha** | **Avena fatua** beobachtet | **Avena fatua** errechnet* |
|---|---|---|---|
| I-2 | 4<br>2 | 80<br>70 | |
| Bifenox | 250<br>125<br>60 | 10<br>10<br>10 | |

(fortgesetzt)

| | **Aufw.-menge g ai/ha** | **Avena fatua** beobachtet | **Avena fatua** errechnet* |
|---|---|---|---|
| I-2 + Bifenox | 4+250<br>2+250<br>4+125<br>2+125<br>4+60<br>2+60 | 90<br>90<br>90<br>90<br>90<br>90 | 82<br>73<br>82<br>73<br>82<br>73 |

**Tabelle A-1-21**

| | **Aufw.-menge g ai/ha** | **Xanthium strumarium** beobachtet | **Xanthium strumarium** errechnet* |
|---|---|---|---|
| I-2 | 8 | 70 | |
| Bifenox | 250<br>125<br>60 | 70<br>60<br>60 | |
| I-2 + Bifenox | 8+250<br>8+125<br>8+60 | 98<br>98<br>98 | 91<br>88<br>88 |
| * Werte errechnet nach Colby | | | |

**Tabelle A-1-22**

| | **Aufw.-menge g ai/ha** | **Alopecurus myosuroides** beobachtet | **Alopecurus myosuroides** errechnet* |
|---|---|---|---|
| I-2 | 4<br>2 | 80<br>70 | |
| 2,4-D-Ester | 250<br>125 | 0<br>0 | |
| I-2 + 2,4-D-Ester | 4+250<br>2+250<br>4+125<br>2+125 | 90<br>90<br>90<br>90 | 80<br>70<br>80<br>70 |
| * Werte errechnet nach Colby | | | |

**Tabelle A-1-23**

| | **Aufw.-menge g ai/ha** | **Bromus secalinus** beobachtet | **Bromus secalinus** errechnet* |
|---|---|---|---|
| I-2 | 8<br>4 | 80<br>70 | |

(fortgesetzt)

| | **Aufw.-menge g ai/ha** | **Bromus secalinus** beobachtet | **Bromus secalinus** errechnet* |
|---|---|---|---|
| | 2 | 70 | |
| 2,4-D-Ester | 250<br>125<br>60 | 0<br>0<br>0 | |
| I-2 +<br>2,4-D-Ester | 8+250<br>4+250<br>2+250<br>8+125<br>4+125<br>2+125<br>8+60<br>4+60<br>2+60 | 98<br>90<br>80<br>98<br>80<br>80<br>90<br>80<br>80 | 80<br>70<br>70<br>80<br>70<br>70<br>80<br>70<br>70 |

**Tabelle A-1-24**

| | **Aufw.-menge g ai/ha** | **Cassia tora** beobachtet | **Cassia tora** errechnet* |
|---|---|---|---|
| I-2 | 2 | 20 | |
| 2,4-D-Ester | 250<br>125<br>60 | 50<br>50<br>50 | |
| I-2 +<br>2,4-D-Ester | 2+250<br>2+125<br>2+60 | 80<br>70<br>70 | 60<br>60<br>60 |
| * Werte errechnet nach Colby | | | |

**Tabelle A-1-25**

| | **Aufw.-menge g ai/ha** | **Bromus secalinus** beobachtet | **Bromus secalinus** errechnet* |
|---|---|---|---|
| I-2 | 2 | 90 | |
| Fenoxaprop-(P)-ethyl | 30<br>15<br>8 | 0<br>0<br>0 | |
| I-2 +<br>Fenoxaprop-(P)-ethyl | 2+30<br>2+15<br>2+8 | 95<br>95<br>95 | 90<br>90<br>90 |

**Tabelle A-1-26**

| | Aufw.-menge g ai/ha | Ipomoea hederacea beobachtet | Ipomoea hederacea errechnet* |
|---|---|---|---|
| I-2 | 4<br>2 | 80<br>80 | |
| Fenoxaprop-(P)-ethyl | 30 | 0 | |
| I-2 + Fenoxaprop-(P)-ethyl | 4+30<br>2+30 | 90<br>90 | 80<br>80 |
| * Werte errechnet nach Colby | | | |

**Tabelle A-1-27**

| | Aufw.-menge g ai/ha | Veronica persicaria beobachtet | Veronica persicaria errechnet* |
|---|---|---|---|
| I-2 | 8 | 40 | |
| Fenoxaprop-(P)-ethyl | 30<br>15<br>8 | 0<br>0<br>0 | |
| I-2 + Fenoxaprop-(P)-ethyl | 8+30<br>8+15<br>8+8 | 98<br>70<br>70 | 40<br>40<br>40 |

**Tabelle A-1-28**

| | Aufw.-menge g ai/ha | Bromus secalinus beobachtet | Bromus secalinus errechnet* |
|---|---|---|---|
| I-2 | 8<br>4 | 80<br>80 | |
| Flupyrsulfuron | 4<br>2 | 0<br>0 | |
| I-2 + Flupyrsulfuron | 8+4<br>4+4<br>8+2<br>4+2 | 95<br>90<br>95<br>90 | 80<br>80<br>80<br>80 |
| * Werte errechnet nach Colby | | | |

**Tabelle A-1-29**

| | Aufw.-menge g ai/ha | Digitaria sanguinalis beobachtet | Digitaria sanguinalis errechnet* |
|---|---|---|---|
| I-2 | 8 | 80 | |

(fortgesetzt)

| | **Aufw.-menge g ai/ha** | **Digitaria sanguinalis** beobachtet | **Digitaria sanguinalis** errechnet* |
|---|---|---|---|
| | 4<br>2 | 60<br>30 | |
| Flupyrsulfuron | 4 | 20 | |
| I-2 + Flupyrsulfuron | 8+4<br>4+4<br>2+4 | 99<br>80<br>80 | 84<br>68<br>44 |

**Tabelle A-1-30**

| | **Aufw.-menge g ai/ha** | **Polygonum convolvolus** beobachtet | **Polygonum convolvolus** errechnet* |
|---|---|---|---|
| I-2 | 4<br>2 | 70<br>70 | |
| Flupyrsulfuron | 4<br>2 | 80<br>70 | |
| I-2 + Flupyrsulfuron | 4+4<br>2+4<br>4+2<br>2+2 | 98<br>98<br>98<br>95 | 94<br>94<br>91<br>91 |
| * Werte errechnet nach Colby | | | |

**Tabelle A-1-31**

| | **Aufw.-menge g ai/ha** | **Bromus secalinus** beobachtet | **Bromus secalinus** errechnet* |
|---|---|---|---|
| I-2 | 8<br>4<br>2 | 80<br>80<br>80 | |
| Fluroxypyr | 125<br>60 | 0<br>0 | |
| I-2 + Fluroxypyr | 8+125<br>4+125<br>2+125<br>8+60<br>4+60<br>2+60 | 100<br>90<br>90<br>98<br>90<br>90 | 80<br>80<br>80<br>80<br>80<br>80 |

**Tabelle A-1-32**

| | **Aufw.-menge g ai/ha** | **Matricaria inodora** beobachtet | **Matricaria inodora** errechnet* |
|---|---|---|---|
| I-2 | 2 | 50 | |
| Fluroxypyr | 125<br>60 | 70<br>30 | |
| I-2 + Fluroxypyr | 2+125<br>2+60 | 100<br>95 | 85<br>65 |
| * Werte errechnet nach Colby | | | |

**Tabelle A-1-33**

| | **Aufw.-menge g ai/ha** | **Veronica persicaria** beobachtet | **Veronica persicaria** errechnet* |
|---|---|---|---|
| I-2 | 4<br>2 | 30<br>0 | |
| Fluroxypyr | 125 | 90 | |
| I-2 + Fluroxypyr | 4+125<br>2+125 | 98<br>98 | 93<br>90 |

**Tabelle A-1-34**

| | **Aufw.-menge g ai/ha** | **Bromus secalinus** beobachtet | **Bromus secalinus** errechnet* |
|---|---|---|---|
| I-2 | 8<br>4 | 80<br>80 | |
| Glyphosate | 250<br>125 | 80<br>20 | |
| I-2 + Glyphosate | 8+250<br>4+250<br>8+125<br>4+125 | 100<br>100<br>98<br>98 | 96<br>96<br>84<br>84 |
| * Werte errechnet nach Colby | | | |

**Tabelle A-1-35**

| | **Aufw.-menge g ai/ha** | **Eriochloa villosa** beobachtet | **Eriochloa villosa** errechnet* |
|---|---|---|---|
| I-2 | 8<br>4<br>2 | 70<br>40<br>20 | |

(fortgesetzt)

| | **Aufw.-menge g ai/ha** | **Eriochloa villosa** beobachtet | **Eriochloa villosa** errechnet* |
|---|---|---|---|
| Glyphosate | 250 | 70 | |
| I-2 + Glyphosate | 8+250<br>4+250<br>2+250 | 100<br>100<br>95 | 91<br>82<br>76 |

**Tabelle A-1-36**

| | **Aufw.-menge g ai/ha** | **Veronica persicaria** beobachtet | **Veronica persicaria** errechnet* |
|---|---|---|---|
| I-2 | 4<br>2 | 30<br>0 | |
| Glyphosate | 250 | 50 | |
| I-2 + Glyphosate | 4+250<br>2+250 | 100<br>100 | 65<br>50 |
| * Werte errechnet nach Colby | | | |

**Tabelle A-1-37**

| | **Aufw.-menge g ai/ha** | **Bromus secalinus** beobachtet | **Bromus secalinus** errechnet* |
|---|---|---|---|
| I-2 | 8<br>4 | 80<br>80 | |
| Imazamox | 8 | 60 | |
| I-2 + Imazamox | 8+8<br>4+8 | 100<br>100 | 92<br>92 |

**Tabelle A-1-38**

| | **Aufw.-menge g ai/ha** | **Matricaria inodora** beobachtet | **Matricaria inodora** errechnet* |
|---|---|---|---|
| I-2 | 2 | 50 | |
| Imazamox | 15<br>8 | 50<br>30 | |
| I-2 + | 2+15 | 100 | 75 |

(fortgesetzt)

| | **Aufw.-menge g ai/ha** | **Matricaria inodora** beobachtet | **Matricaria inodora** errechnet* |
|---|---|---|---|
| Imazamox | 2+8 | 100 | 65 |
| * Werte errechnet nach Colby | | | |

**Tabelle A-1-39**

| | **Aufw.-menge g ai/ha** | **Digitaria sanguinalis** beobachtet | **Digitaria sanguinalis** errechnet* |
|---|---|---|---|
| I-2 | 8<br>4<br>2 | 80<br>60<br>30 | |
| Imazamox | 8 | 30 | |
| I-2 + Imazamox | 8+8<br>4+8<br>2+8 | 98<br>98<br>80 | 86<br>72<br>51 |

**Tabelle A-1-40**

| | **Aufw.-menge g ai/ha** | **Bromus secalinus** beobachtet | **Bromus secalinus** errechnet* |
|---|---|---|---|
| I-2 | 8<br>4 | 80<br>80 | |
| Iodosulfuron | 4<br>2 | 0<br>0 | |
| I-2 + Iodosulfuron | 8+4<br>4+4<br>8+2<br>4+2 | 100<br>100<br>98<br>98 | 80<br>80<br>80<br>80 |
| * Werte errechnet nach Colby | | | |

**Tabelle A-1-41**

| | **Aufw.-menge g ai/ha** | Veronica persicaria beobachtet | **Veronica persicaria** errechnet* |
|---|---|---|---|
| I-2 | 4<br>2 | 30<br>0 | |
| Iodosulfuron | 2 | 90 | |
| I-2 + Iodosulfuron | 4+2<br>2+2 | 100<br>100 | 93<br>90 |

**Tabelle A-1-42**

| | **Aufw.-menge g ai/ha** | Setaria viridis beobachtet | Setaria viridis errechnet* |
|---|---|---|---|
| I-2 | 4 | 90 | |
| Iodosulfuron | 4<br>2 | 0<br>0 | |
| I-2 + Iodosulfuron | 4+4<br>4+2 | 98<br>95 | 90<br>90 |
| * Werte errechnet nach Colby | | | |

**Tabelle A-1-43**

| | **Aufw.-menge g ai/ha** | Bromus secalinus beobachtet | Bromus secalinus errechnet* |
|---|---|---|---|
| I-2 | 8<br>4 | 80<br>80 | |
| Isoxaflutole | 4<br>2 | 0<br>0 | |
| I-2 + Isoxaflutole | 8+4<br>4+4<br>8+2<br>4+2 | 100<br>98<br>100<br>98 | 80<br>80<br>80<br>80 |

**Tabelle A-1-44**

| | **Aufw.-menge g ai/ha** | Alopecurus myosuroides beobachtet | Alopecurus myosuroides errechnet* |
|---|---|---|---|
| I-2 | 8 | 90 | |
| Isoxaflutole | 4<br>2 | 0<br>0 | |
| I-2 + Isoxaflutole | 8+4<br>8+2 | 98<br>98 | 90<br>90 |
| * Werte errechnet nach Colby | | | |

**Tabelle A-1-45**

| | **Aufw.-menge g ai/ha** | Matricaria inodora beobachtet | Matricaria inodora errechnet* |
|---|---|---|---|
| I-2 | 2 | 50 | |

(fortgesetzt)

| | **Aufw.-menge g ai/ha** | Matricaria inodora beobachtet | Matricaria inodora errechnet* |
|---|---|---|---|
| Isoxaflutole | 4 | 70 | |
| I-2 + Isoxaflutole | 2+4 | 100 | 85 |

**Tabelle A-1-46**

| | **Aufw.-menge g ai/ha** | Matricaria inodora beobachtet | Matricaria inodora errechnet* |
|---|---|---|---|
| I-2 | 2 | 50 | |
| Mecoprop-P | 250<br>125 | 0<br>0 | |
| I-2 + Mecoprop-P | 2+250<br>2+125 | 100<br>98 | 50<br>50 |
| * Werte errechnet nach Colby | | | |

**Tabelle A-1-47**

| | **Aufw.-menge g ai/ha** | Galium aparine beobachtet | Galium aparine errechnet* |
|---|---|---|---|
| I-2 | 4 | 80 | |
| Mecoprop-P | 250<br>125 | 40<br>20 | |
| I-2 + Mecoprop-P | 4+250<br>4+125 | 98<br>95 | 88<br>84 |

**Tabelle A-1-48**

| | **Aufw.-menge g ai/ha** | Digitaria sanguinalis beobachtet | Digitaria sanguinalis errechnet* |
|---|---|---|---|
| I-2 | 8 | 80 | |
| Mecoprop-P | 250<br>125 | 70<br>40 | |
| I-2 + | 8+250 | 100 | 94 |

(fortgesetzt)

| | **Aufw.-menge g ai/ha** | Digitaria sanguinalis beobachtet | Digitaria sanguinalis errechnet* |
|---|---|---|---|
| Mecoprop-P | 8+125 | 98 | 88 |
| * Werte errechnet nach Colby | | | |

**Tabelle A-1-49**

| | **Aufw.-menge g ai/ha** | Bromus secalinus beobachtet | Bromus secalinus errechnet* |
|---|---|---|---|
| I-2 | 8<br>4<br>2 | 80<br>80<br>80 | |
| Mesotrione | 30<br>15 | 0<br>0 | |
| I-2 + Mesotrione | 8+30<br>4+30<br>2+30<br>8+15<br>4+15<br>2+15 | 100<br>98<br>95<br>99<br>98<br>95 | 80<br>80<br>80<br>80<br>80<br>80 |

**Tabelle A-1-50**

| | **Aufw.-menge g ai/ha** | Polygonum convolvolus beobachtet | Polygonum convolvolus errechnet* |
|---|---|---|---|
| I-2 | 4<br>2 | 70<br>70 | |
| Mesotrione | 15 | 50 | |
| I-2 + Mesotrione | 4+15<br>2+15 | 98<br>95 | 85<br>85 |
| * Werte errechnet nach Colby | | | |

**Tabelle A-1-51**

| | **Aufw.-menge g ai/ha** | Alopecurus myosuroides beobachtet | Alopecurus myosuroides errechnet* |
|---|---|---|---|
| I-2 | 8<br>2 | 90<br>70 | |
| Mesotrione | 30<br>15 | 0<br>0 | |
| I-2 + | 8+30 | 95 | 90 |

(fortgesetzt)

| | **Aufw.-menge g ai/ha** | Alopecurus myosuroides beobachtet | Alopecurus myosuroides errechnet* |
|---|---|---|---|
| Mesotrione | 2+30<br>8+15<br>2+15 | 95<br>95<br>80 | 70<br>90<br>70 |

**Tabelle A-1-52**

| | **Aufw.-menge g ai/ha** | **Cassia tora** beobachtet | **Cassia tora** errechnet* |
|---|---|---|---|
| I-2 | 8 | 0 | |
| Florasulam | 4 | 0 | |
| I-2 + Florasulam | 8+4 | 98 | 0 |
| * Werte errechnet nach Colby | | | |

**Tabelle A-1-53**

| | **Aufw.-menge g ai/ha** | Bromus secalinus beobachtet | Bromus secalinus errechnet* |
|---|---|---|---|
| I-2 | 2 | 70 | |
| Florasulam | 4<br>2 | 30<br>30 | |
| I-2 + Florasulam | 2+4<br>2+2 | 95<br>95 | 79<br>79 |

**Tabelle A-1-54**

| | **Aufw.-menge g ai/ha** | **Veronica persicaria** beobachtet | **Veronica persicaria** errechnet* |
|---|---|---|---|
| I-2 | 8 | 0 | |
| Florasulam | 4 | 70 | |
| I-2 + Florasulam | 8+4 | 98 | 70 |
| * Werte errechnet nach Colby | | | |

**Tabelle A-1-55**

| | **Aufw.-menge g ai/ha** | **Ipomoea hederacea** beobachtet | **Ipomoea hederacea** errechnet* |
|---|---|---|---|
| I-2 | 8 | 80 | |
| Foramsulfuron | 15 | 80 | |
| I-2 + Foramsulfuron | 8+15 | 100 | 96 |

**Tabelle A-1-56**

| | **Aufw.-menge g ai/ha** | **Cyperus esculentus** beobachtet | **Cyperus esculentus** errechnet* |
|---|---|---|---|
| I-2 | 4 | 20 | |
| Foramsulfuron | 8 | 80 | |
| I-2 + Foramsulfuron | 4+8 | 90 | 84 |
| * Werte errechnet nach Colby | | | |

**Tabelle A-1-57**

| | **Aufw.-menge g ai/ha** | **Eriochloa villosa** beobachtet | **Eriochloa villosa** errechnet* |
|---|---|---|---|
| I-2 | 4<br>2 | 40<br>0 | |
| Foramsulfuron | 15 | 60 | |
| I-2 + Foramsulfuron | 4+15<br>2+15 | 80<br>70 | 76<br>60 |

**Tabelle A-1-58**

| | **Aufw.-menge g ai/ha** | **Bromus secalinus** beobachtet | **Bromus secalinus** errechnet* |
|---|---|---|---|
| I-2 | 2 | 70 | |
| Flurtamone | 60 | 30 | |
| I-2 + | 2+60 | 95 | 79 |

(fortgesetzt)

| | Aufw.-menge g ai/ha | Bromus secalinus beobachtet | Bromus secalinus errechnet* |
|---|---|---|---|
| Flurtamone | | | |
| * Werte errechnet nach Colby | | | |

**Tabelle A-1-59**

| | Aufw.-menge g ai/ha | Matricaria inodora beobachtet | Matricaria inodora errechnet* |
|---|---|---|---|
| I-2 | 2 | 80 | |
| Flurtamone | 30 | 30 | |
| I-2 + Flurtamone | 2+30 | 95 | 86 |

**Tabelle A-1-60**

| | Aufw.-menge g ai/ha | Cyperus esculentus beobachtet | Cyperus esculentus errechnet* |
|---|---|---|---|
| I-2 | 4<br>2 | 20<br>0 | |
| Mesosulfuron | 15<br>8 | 70<br>70 | |
| I-2 + Mesosulfuron | 4+15<br>2+15<br>4+8<br>2+8 | 90<br>90<br>90<br>90 | 76<br>70<br>76<br>70 |
| * Werte errechnet nach Colby | | | |

**Tabelle A-1-61**

| | Aufw.-menge g ai/ha | Bromus secalinus beobachtet | Bromus secalinus errechnet* |
|---|---|---|---|
| I-2 | 2 | 70 | |
| Mesosulfuron | 8 | 0 | |
| I-2 + Mesosulfuron | 2+8 | 90 | 70 |

**Tabelle A-1-62**

| | **Aufw.-menge g ai/ha** | **Avena fatua** beobachtet | **Avena fatua** errechnet* |
|---|---|---|---|
| I-2 | 8<br>4<br>2 | 90<br>90<br>50 | |
| Metosulam | 8 | 0 | |
| I-2 + Metosulam | 8+8<br>4+8<br>2+8 | 98<br>95<br>90 | 90<br>90<br>50 |
| * Werte errechnet nach Colby | | | |

**Tabelle A-1-63**

| | **Aufw.-menge g ai/ha** | **Veronica persicaria** beobachtet | **Veronica persicaria** errechnet* |
|---|---|---|---|
| I-2 | 8<br>4 | 0<br>0 | |
| Metosulam | 4 | 80 | |
| I-2 + Metosulam | 8+4<br>4+4 | 100<br>100 | 80<br>80 |

**Tabelle A-1-64**

| | **Aufw.-menge g ai/ha** | **Digitaria sanguinalis** beobachtet | Digitaria sanguinalis errechnet* |
|---|---|---|---|
| I-2 | 2 | 70 | |
| Metosulam | 8 | 30 | |
| I-2 + Metosulam | 2+8 | 90 | 79 |
| * Werte errechnet nach Colby | | | |

**Tabelle A-1-65**

| | **Aufw.-menge g ai/ha** | **Matricaria inodora** beobachtet | **Matricaria inodora** errechnet* |
|---|---|---|---|
| I-2 | 2 | 80 | |

(fortgesetzt)

| | **Aufw.-menge g ai/ha** | **Matricaria inodora** beobachtet | **Matricaria inodora** errechnet* |
|---|---|---|---|
| Metribuzin | 30 | 0 | |
| I-2 + Metribuzin | 2+30 | 95 | 80 |

**Tabelle A-1-66**

| | **Aufw.-menge g ai/ha** | **Xanthium strumarium** beobachtet | **Xanthium strumarium** errechnet* |
|---|---|---|---|
| I-2 | 4 | 90 | |
| Metribuzin | 30 | 40 | |
| I-2 + Metribuzin | 4+30 | 98 | 94 |
| * Werte errechnet nach Colby | | | |

**Tabelle A-1-67**

| | **Aufw.-menge g ai/ha** | **Lolium perenne** beobachtet | **Lolium perenne** errechnet* |
|---|---|---|---|
| I-2 | 2 | 70 | |
| Metsulfuron | 2 | 70 | |
| I-2 + Metsulfuron | 2+2 | 100 | 91 |

**Tabelle A-1-68**

| | **Aufw.-menge g ai/ha** | **Bromus secalinus** beobachtet | **Bromus secalinus** errechnet* |
|---|---|---|---|
| I-2 | 2 | 80 | |
| Metsulfuron | 4<br>2 | 0<br>0 | |
| I-2 + | 2+4 | 95 | 80 |

(fortgesetzt)

| | **Aufw.-menge g ai/ha** | **Bromus secalinus** beobachtet | **Bromus secalinus** errechnet* |
|---|---|---|---|
| Metsulfuron | 2+2 | 95 | 80 |
| * Werte errechnet nach Colby | | | |

**Tabelle A-1-69**

| | **Aufw.-menge g ai/ha** | **Cyperus esculentus** beobachtet | **Cyperus esculentus** errechnet* |
|---|---|---|---|
| I-2 | 8<br>4<br>2 | 80<br>60<br>40 | |
| Metsulfuron | 4 | 30 | |
| I-2 + Metsulfuron | 8+4<br>4+4<br>2+4 | 95<br>90<br>80 | 86<br>72<br>58 |

**Tabelle A-1-70**

| | **Aufw.-menge g ai/ha** | **Eriochloa villosa** beobachtet | **Eriochloa villosa** errechnet* |
|---|---|---|---|
| I-2 | 2 | 0 | |
| Nicosulfuron | 30 | 90 | |
| I-2 + Nicosulfuron | 2+30 | 95 | 90 |
| * Werte errechnet nach Colby | | | |

**Tabelle A-1-71**

| | **Aufw.-menge g ai/ha** | **Eriochloa villosa** beobachtet | **Eriochloa villosa** errechnet* |
|---|---|---|---|
| I-2 | 8<br>4<br>2 | 60<br>30<br>0 | |
| Picolinafen | 30<br>15 | 80<br>30 | |
| I-2 + Picolinafen | 8+30<br>4+30<br>2+30 | 98<br>95<br>90 | 92<br>86<br>80 |

(fortgesetzt)

| | **Aufw.-menge g ai/ha** | **Eriochloa villosa** beobachtet | **Eriochloa villosa** errechnet* |
|---|---|---|---|
| | 8+15<br>4+15<br>2+15 | 95<br>90<br>90 | 72<br>51<br>30 |

**Tabelle A-1-72**

| | **Aufw.-menge g ai/ha** | **Lolium perenne** beobachtet | **Lolium perenne** errechnet* |
|---|---|---|---|
| I-2 | 2 | 70 | |
| Picolinafen | 30<br>15 | 20<br>0 | |
| I-2 + Picolinafen | 2+30<br>2+15 | 95<br>95 | 76<br>70 |
| * Werte errechnet nach Colby | | | |

**Tabelle A-1-73**

| | **Aufw.-menge g ai/ha** | **Cassia tora** beobachtet | **Cassia tora** errechnet* |
|---|---|---|---|
| I-2 | 8<br>4 | 0<br>0 | |
| Picolinafen | 30 | 70 | |
| I-2 + Picolinafen | 8+30<br>4+30 | 100<br>80 | 70<br>70 |

**Tabelle A-1-74**

| | **Aufw.-menge g ai/ha** | **Veronica persicaria** beobachtet | **Veronica persicaria** errechnet* |
|---|---|---|---|
| I-2 | 4 | 0 | |
| Propoxycarbazone-sodium | 60 | 40 | |
| I-2 + Propoxycarbazone-sodium | 4+60 | 100 | 40 |
| * Werte errechnet nach Colby | | | |

**Tabelle A-1-75**

| | **Aufw.-menge g ai/ha** | **Cassia tora** beobachtet | **Cassia tora** errechnet* |
|---|---|---|---|
| I-2 | 8<br>4 | 0<br>0 | |
| Propoxycarbazone-sodium | 30 | 30 | |
| I-2 + Propoxycarbazone-sodium | 8+30<br>4+30 | 80<br>70 | 30<br>30 |

**Tabelle A-1-76**

| | **Aufw.-menge g ai/ha** | **Polygonum convolvolus** beobachtet | **Polygonum convolvolus** errechnet* |
|---|---|---|---|
| I-2 | 4<br>2 | 80<br>70 | |
| Propoxycarbazone-sodium | 60<br>30 | 0<br>0 | |
| I-2 + Propoxycarbazone-sodium | 4+60<br>2+60<br>4+30<br>2+30 | 90<br>90<br>90<br>90 | 80<br>70<br>80<br>70 |
| * Werte errechnet nach Colby | | | |

**Tabelle A-1-77**

| | **Aufw.-menge g ai/ha** | **Cassia tora** beobachtet | **Cassia tora** errechnet* |
|---|---|---|---|
| I-2 | 8 | 0 | |
| Rimsulfuron | 8<br>4 | 80<br>60 | |
| I-2 + Rimsulfuron | 8+8<br>8+4 | 100<br>80 | 80<br>60 |

**Tabelle A-1-78**

| | **Aufw.-menge g ai/ha** | **Abutilon theophrasti** beobachtet | **Abutilon theophrasti** errechnet* |
|---|---|---|---|
| I-2 | 4<br>2 | 70<br>60 | |
| Rimsulfuron | 4 | 70 | |

(fortgesetzt)

| | **Aufw.-menge g ai/ha** | **Abutilon theophrasti** beobachtet | **Abutilon theophrasti** errechnet* |
|---|---|---|---|
| | | | |
| I-2 + Rimsulfuron | 4+4<br>2+4 | 95<br>95 | 91<br>88 |
| * Werte errechnet nach Colby | | | |

**Tabelle A-1-79**

| | **Aufw.-menge g ai/ha** | **Avena fatua** beobachtet | **Avena fatua** errechnet* |
|---|---|---|---|
| I-2 | 2 | 70 | |
| Rimsulfuron | 8<br>4 | 70<br>70 | |
| I-2 + Rimsulfuron | 2+8<br>2+4 | 95<br>95 | 91<br>91 |

**Tabelle A-1-80**

| | **Aufw.-menge g ai/ha** | **Bromus secalinus** beobachtet | **Bromus secalinus** errechnet* |
|---|---|---|---|
| I-2 | 8<br>4 | 80<br>70 | |
| Sulcotrione | 120<br>60 | 30<br>0 | |
| I-2 + Sulcotrione | 8+120<br>4+120<br>8+60<br>4+60 | 98<br>90<br>98<br>90 | 86<br>79<br>80<br>70 |
| * Werte errechnet nach Colby | | | |

**Tabelle A-1-81**

| | **Aufw.-menge g ai/ha** | **Bromus secalinus** beobachtet | **Bromus secalinus** errechnet* |
|---|---|---|---|
| I-2 | 8<br>4<br>2 | 80<br>70<br>70 | |
| Terbuthylazine | 500 | 50 | |
| I-2 + | 8+500 | 100 | 90 |

(fortgesetzt)

| | **Aufw.-menge g ai/ha** | **Bromus secalinus** beobachtet | **Bromus secalinus** errechnet* |
|---|---|---|---|
| Terbuthylazine | 4+500<br>2+500 | 100<br>100 | 85<br>85 |

**Tabelle A-1-82**

| | **Aufw.-menge g ai/ha** | **Setaria viridis** beobachtet | **Setaria viridis** errechnet* |
|---|---|---|---|
| I-2 | 8 | 95 | |
| Thifensulfuron-methyl | 15<br>8 | 0 | |
| I-2 + Thifensulfuron-methyl | 8+15<br>8+8 | 100<br>100 | 95<br>95 |
| * Werte errechnet nach Colby | | | |

**Tabelle A-1-83**

| | **Aufw.-menge g ai/ha** | **Bromus secalinus** beobachtet | **Bromus secalinus** errechnet* |
|---|---|---|---|
| I-2 | 8<br>4 | 80<br>70 | |
| Thifensulfuron-methyl | 15<br>8 | 0<br>0 | |
| I-2 + Thifensulfuron-methyl | 8+15<br>4+15<br>8+8<br>4+8 | 98<br>98<br>98<br>98 | 80<br>70<br>80<br>70 |

**Tabelle A-1-84**

| | **Aufw.-menge g ai/ha** | **Eriochloa villosa** beobachtet | **Eriochloa villosa** errechnet* |
|---|---|---|---|
| I-2 | 8 | 90 | |
| Thifensulfuron-methyl | 15 | 10 | |
| I-2 + Thifensulfuron-methyl | 8+15 | 98 | 91 |
| * Werte errechnet nach Colby | | | |

**Tabelle A-1-85**

| | **Aufw.-menge g ai/ha** | **Bromus secalinus** beobachtet | **Bromus secalinus** errechnet* |
|---|---|---|---|
| I-2 | 8<br>4<br>2 | 80<br>70<br>70 | |
| Tribenuron-methyl | 8<br>4 | 0<br>0 | |
| I-2 + Tribenuron-methyl | 8+8<br>4+8<br>2+8<br>8+4<br>4+4<br>2+4 | 95<br>95<br>90<br>95<br>90<br>90 | 80<br>70<br>70<br>80<br>70<br>70 |

**Tabelle A-1-86**

| | **Aufw.-menge g ai/ha** | **Cyperus esculentus** beobachtet | **Cyperus esculentus** errechnet* |
|---|---|---|---|
| I-2 | 8<br>4<br>2 | 70<br>60<br>40 | |
| Tribenuron-methyl | 8<br>4 | 0<br>0 | |
| I-2 + Tribenuron-methyl | 8+8<br>4+8<br>2+8<br>8+4<br>4+4<br>2+4 | 90<br>70<br>70<br>80<br>70<br>70 | 70<br>60<br>40<br>70<br>60<br>40 |
| * Werte errechnet nach Colby | | | |

**Tabelle A-1-87**

| | **Aufw.-menge g ai/ha** | **Veronica persicaria** beobachtet | **Veronica persicaria** errechnet* |
|---|---|---|---|
| I-2 | 8<br>4 | 30<br>30 | |
| Tribenuron-methyl | 4 | 90 | |
| I-2 + Tribenuron-methyl | 8+4<br>4+4 | 98<br>98 | 93<br>93 |

Tabelle A-1-88

| | **Aufw.-menge g ai/ha** | **Bromus secalinus** beobachtet | **Bromus secalinus** errechnet* |
|---|---|---|---|
| I-2 | 8<br>4<br>2 | 80<br>70<br>70 | |
| HWH 4991 | 60<br>30 | 30<br>20 | |
| I-2 + HWH 4991 | 8+60<br>4+60<br>2+60<br>8+30<br>4+30<br>2+30 | 100<br>100<br>95<br>99<br>99<br>95 | 86<br>79<br>79<br>84<br>76<br>76 |
| * Werte errechnet nach Colby | | | |

Tabelle A-1-89

| | **Aufw.-menge g ai/ha** | **Veronica persicaria** beobachtet | **Veronica persicaria** errechnet* |
|---|---|---|---|
| I-2 | 8<br>4<br>2 | 30<br>30<br>0 | |
| HWH 4991 | 30 | 90 | |
| I-2 + HWH 4991 | 8+30<br>4+30<br>2+30 | 100<br>100<br>100 | 93<br>93<br>90 |

Tabelle A-1-90

| | **Aufw.-menge g ai/ha** | **Lolium perenne** beobachtet | **Lolium perenne** errechnet* |
|---|---|---|---|
| I-2 | 2 | 80 | |
| HWH 4991 | 60<br>30 | 60<br>20 | |
| I-2 + HWH 4991 | 2+60<br>2+30 | 98<br>95 | 92<br>84 |
| * Werte errechnet nach Colby | | | |

**Tabelle A-1-91**

| | **Aufw.-menge g ai/ha** | **Alopecurus myosuroides** beobachtet | **Alopecurus myosuroides** errechnet* |
|---|---|---|---|
| I-2 | 4<br>2 | 80<br>80 | |
| Sulfosate | 250 | 30 | |
| I-2 + Sulfosate | 4+250<br>2+250 | 95<br>95 | 86<br>86 |

**Tabelle A-1-92**

| | **Aufw.-menge g ai/ha** | **Lolium perenne** beobachtet | **Lolium perenne** errechnet* |
|---|---|---|---|
| I-2 | 4<br>2 | 70<br>70 | |
| Sulfosate | 250 | 70 | |
| I-2 + Sulfosate | 4+250<br>2+250 | 98<br>98 | 91<br>91 |
| * Werte errechnet nach Colby | | | |

**Tabelle A-1-93**

| | **Aufw.-menge g ai/ha** | **Lolium perenne** beobachtet | **Lolium perenne** errechnet* |
|---|---|---|---|
| I-2 | 8<br>4<br>2 | 90<br>70<br>70 | |
| Tritosulfuron | 30<br>15 | 0<br>0 | |
| I-2 + Tritosulfuron | 8+30<br>4+30<br>2+30<br>8+15<br>4+15<br>2+15 | 98<br>98<br>90<br>98<br>95<br>95 | 90<br>70<br>70<br>90<br>70<br>70 |

**Tabelle A-1-94**

| | **Aufw.-menge g ai/ha** | **Setaria viridis** beobachtet | **Setaria viridis** errechnet* |
|---|---|---|---|
| I-2 | 8 | 95 | |

(fortgesetzt)

| | **Aufw.-menge g ai/ha** | **Setaria viridis** beobachtet | **Setaria viridis** errechnet* |
|---|---|---|---|
| | 4<br>2 | 90<br>90 | |
| Tritosulfuron | 30 | 0 | |
| I-2 + Tritosulfuron | 8+30<br>4+30<br>2+30 | 99<br>95<br>95 | 95<br>90<br>90 |
| * Werte errechnet nach Colby | | | |

**Tabelle A-1-95**

| | **Aufw.-menge g ai/ha** | **Digitaria sanguinalis** beobachtet | **Digitaria sanguinalis** errechnet* |
|---|---|---|---|
| I-2 | 8 | 90 | |
| Tritosulfuron | 30<br>15 | 40<br>30 | |
| I-2 + Tritosulfuron | 8+30<br>8+15 | 98<br>98 | 94<br>93 |

**Tabelle A-1-96**

| | **Aufw.-menge g ai/ha** | **Lolium perenne** beobachtet | **Lolium perenne** errechnet* |
|---|---|---|---|
| I-2 | 8<br>4<br>2 | 90<br>70<br>70 | |
| SLA 5599 | 60<br>30 | 30<br>0 | |
| I-2 + SLA 5599 | 8+60<br>4+60<br>2+60<br>8+30<br>4+30<br>2+30 | 99<br>98<br>95<br>99<br>98<br>90 | 93<br>79<br>79<br>90<br>70<br>70 |
| * Werte errechnet nach Colby | | | |

**Tabelle A-1-97**

| | **Aufw.-menge g ai/ha** | **Avena fatua** beobachtet | **Avena fatua** errechnet* |
|---|---|---|---|
| I-2 | 4<br>2 | 90<br>80 | |
| SLA 5599 | 60<br>30 | 0<br>0 | |
| I-2 + SLA 5599 | 4+60<br>2+60<br>4+30<br>2+30 | 95<br>90<br>95<br>90 | 90<br>80<br>90<br>80 |

**Tabelle A-1-98**

| | **Aufw.-menge g ai/ha** | **Veronica persicaria** beobachtet | **Veronica persicaria** errechnet* |
|---|---|---|---|
| I-2 | 8<br>4 | 40<br>0 | |
| SLA 5599 | 30 | 80 | |
| I-2 + SLA 5599 | 8+30<br>4+30 | 100<br>98 | 88<br>80 |
| * Werte errechnet nach Colby | | | |

**Tabelle A-1-99**

| | **Aufw.-menge g ai/ha** | **Bromus secalinus** beobachtet | **Bromus secalinus** errechnet* |
|---|---|---|---|
| I-2 | 4<br>2 | 90<br>80 | |
| Pyraflufen-ethyl 4 | <br>2 | 30<br>30 | |
| I-2 + Pyraflufen-ethyl | 4+4<br>2+4<br>4+2<br>2+2 | 98<br>98<br>98<br>95 | 93<br>86<br>93<br>86 |

**Tabelle A-1-100**

| | **Aufw.-menge g ai/ha** | **Lolium perenne** beobachtet | **Lolium perenne** errechnet* |
|---|---|---|---|
| I-2 | 8<br>4 | 90<br>70 | |

(fortgesetzt)

| | Aufw.-menge g ai/ha | Lolium perenne beobachtet | Lolium perenne errechnet* |
|---|---|---|---|
| | 2 | 70 | |
| Pyraflufen-ethyl | 4<br>2 | 30<br>0 | |
| I-2 + Pyraflufen-ethyl | 8+4<br>4+4<br>2+4<br>8+2<br>4+2<br>2+2 | 99<br>95<br>95<br>99<br>95<br>90 | 93<br>79<br>79<br>90<br>70<br>70 |
| * Werte errechnet nach Colby | | | |

**Tabelle A-1-101**

| | Aufw.-menge g ai/ha | Setria viridis beobachtet | Setria viridis errechnet* |
|---|---|---|---|
| I-2 | 4<br>2 | 90<br>90 | |
| Pyraflufen-ethyl | 4<br>2 | 40<br>40 | |
| I-2 + Pyraflufen-ethyl | 4+4<br>2+4<br>4+2<br>2+2 | 98<br>98<br>98<br>98 | 94<br>94<br>94<br>94 |

**Tabelle A-1-102**

| | Aufw.-menge g ai/ha | Bromus secalinus beobachtet | Bromus secalinus errechnet* |
|---|---|---|---|
| I-2 | 8 | 80 | |
| Flufenacet | 125<br>60<br>30 | 40<br>20<br>0 | |
| I-2+ Flufenacet | 8+125<br>8+60<br>8+30 | 100<br>99<br>99 | 88<br>84<br>80 |
| * Werte errechnet nach Colby | | | |

**Tabelle A-1-103**

| | **Aufw.-menge g ai/ha** | **Polygonum convolvulus** beobachtet | **Polygonum convolvulus** errechnet* |
|---|---|---|---|
| I-2 | 8<br>4<br>2 | 90<br>80<br>70 | |
| Flufenacet | 125<br>60<br>30 | 0<br>0<br>0 | |
| I-2+ Flufenacet | 8+125<br>4+125<br>2+125<br>8+60<br>4+60<br>2+60<br>8+30<br>4+30<br>2+30 | 98<br>90<br>80<br>98<br>90<br>80<br>98<br>90<br>80 | 90<br>80<br>70<br>90<br>80<br>70<br>90<br>80<br>70 |
| * Werte errechnet nach Colby | | | |

**Tabelle A-1-104**

| | **Aufw.-menge g ai/ha** | **Chenopodium album** beobachtet | **Chenopodium album** errechnet* |
|---|---|---|---|
| I-2 | 2 | 70 | |
| Flufenacet | 125<br>60<br>30 | 0<br>0<br>0 | |
| I-2+ Flufenacet | 2+125<br>2+60<br>2+30 | 95<br>95<br>90 | 70<br>70<br>70 |
| * Werte errechnet nach Colby | | | |

## Patentansprüche

**1.** Mittel, enthaltend eine Wirkstoffkombination bestehend aus:

a) einem substituierten Thien-3-yl-sulfonylamino(thio)carbonyl-triazolin(thi)-on der allgemeinen Formel (I)

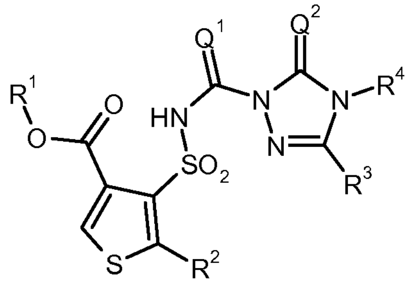

(I)

in welcher

$Q^1$ für Sauerstoff steht,
$Q^2$ für Sauerstoff steht,
$R^1$ für Methyl steht,
$R^2$ für Methyl steht,
$R^3$ für Methoxy steht, und
$R^4$ für Methyl steht,

- sowie Salze der Verbindungen der Formel (I) -
und
b) als weiterer Herbizidverbindung (S)-2-Chlor-N-(2-ethyl-6-methyl-phenyl)-N-(2-methoxy-1-methyl-ethyl)-acet-amid (Metolachlor, S-Metolachlor).

**2.** Verwendung eines Mittels nach Anspruch 1 zur Bekämpfung von unerwünschten Pflanzen.

**3.** Verfahren zur Bekämpfung von unerwünschten Pflanzen, **dadurch gekennzeichnet, dass** man Mittel nach Anspruch 1 auf die unerwünschten Pflanzen und/oder ihren Lebensraum einwirken lässt.

**4.** Verfahren zur Herstellung eines herbiziden Mittels, **dadurch gekennzeichnet, dass** man ein Mittel nach Anspruch 1 mit oberflächenaktiven Mitteln und/oder Streckmitteln vermischt.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0105788 A
- WO 9210660 A
- WO 9530661 A
- EP 303153 A
- WO 9626206 A
- WO 9831681 A
- WO 0128341 A
- WO 9966795 A
- JP 63072605 A
- GB 00820180 A
- DE 3939503 A
- EP 191736 A
- DE 3525205 A


### In der Beschreibung aufgeführte Nicht-Patentliteratur


- **COLBY, S.R.** Calculating synergistic and antagonistic responses of herbicide combinations. *Weeds,* 1967, vol. 15, 20-22